# EUROPEAN PATENT APPLICATION

(11) **EP 3 422 331 A1**
(43) Date of publication of application: **02.01.2019**
(21) Application number: 18177444.9
(22) Date of filing: 13.06.2018
(51) Int. Cl.: G09F 19/08, G09F 21/00, G09F 27/00

(54) **METHOD OF OPERATING MOVING ROBOT**

(30) Priority: 30.06.2017 KR 20170083626
(71) Applicant: LG Electronics Inc., Yeongdeungpo-gu Seoul 07336 (KR)
(72) Inventor: Roh, Eunji, Seoul 08592 (KR); Lee, Sunju, Seoul 08592 (KR); Lee, Jina, Seoul 08592 (KR)
(74) Representative: Ter Meer Steinmeister & Partner

(57) **Abstract**

Disclosed is a method of operating a moving robot including receiving a touch input or a voice input including a predetermined keyword, determining a guidance destination based on the predetermined keyword, creating a route to the determined guidance destination, moving along the created route, and displaying an advertisement image based on the predetermined keyword, thereby improving advertising effects and user satisfaction.

## Description

### CROSS-REFERENCE TO RELATED APPLICATION

The application claims priority under 35 U.S.C. § 119 and 35 U.S.C. § 365 to Korean Patent Application No. 10-2017-0083626, filed June 30, 2017.

### BACKGROUND

### 1. Field

The present disclosure relates to a moving robot and a method of operating the same, and more particularly to a moving robot capable of providing various kinds of services, such as guidance service, to people in a public place and a method of operating the same.

### 2. Background

Information is provided to users through electric bulletin boards, guidance signs, etc. in public places, such as airports, railroad stations, harbors, department stores, and performance halls. However, such electric bulletin boards or the guidance signs provide only certain information selected by service providers to the users in a unidirectional manner, and do not satisfy the demands respective individual users.

Meanwhile, in recent years, kiosks that provide information and services to customers using multimedia devices, such as display means, touchscreens, and speakers, have been increasingly used. Even in this case, however, users must directly manipulate the kiosks. As a result, the kiosks are inconvenient for people who have difficulty in using the kiosks and thus cannot actively satisfy the requirements of users.

Meanwhile, industrial robots have been developed and have realized partial factory automation. In recent years, robot-based fields have further expanded. As a result, medical robots, space robots, etc. have been developed. Domestic robots, which can be used at home, have also been developed.

Consequently, research has been increasingly conducted into methods of providing various kinds of services using robots in public places. One example is a traffic guidance intelligent robot capable of autonomous driving disclosed in Korean Patent No. 10-1193610 dated October 26, 2012. This robot is largely composed of a driving unit, a body, arms, and a head, and an image/voice recognition unit is provided in the head. The robot can make simple conversations with a user through the image/voice recognition unit, and for example, the head can turn left and right in accordance with the face image of a user or voice commands.

However, the robot may hit an obstacle or may collide with a person or another robot while moving. For example, at an airport where there are many users, the robot may frequently hit users and users' feet may get caught in the wheels of the robots. In this case, it may result in human injuries or huge property damages.

Further, the robot has no mechanism for finding the exact position of the head, so it is difficult to quickly turn the head toward a user. Furthermore, the robot has also no mechanism for sensing the rotational direction and amount of the head when the head is turned, so the head may be excessively turned. In addition, when the head turns 360 degrees, wires in the head are entangled.

Another example is a site-customized mobile vehicle advertisement system disclosed in Korean Registered Patent Publication No. 10-1744198 (registered on May 31, 2017). In this Korean publication, people moving through in the place where an advertising vehicle is located are analyzed to select advertisement image data appropriate for the characteristics of the place where the advertising vehicle is located.

The advertising targets are an unspecified number of members of the general public. For this reason, it is difficult to accurately match intended advertising targets with matters of concern and interest to them. In addition, the advertising vehicle does not continuously show the advertising content while following users, with the result that the users understand only some of the advertising content, whereby the advertising effects may be reduced.

The above references are incorporated by reference herein where appropriate for appropriate teachings of additional or alternative details, features and/or technical background.

### Summary

According to one exemplary embodiment, a method of operating a moving robot comprises receiving an input of at least one of a touch or a voice, the input including at least one predetermined keyword; determining a guidance destination based on the at least one predetermined keyword; creating a route to the determined guidance destination; moving along the created route; and displaying an advertisement image based on the at least one predetermined keyword. The at least one predetermined keyword may be at least one selected from among a shop name, an item name, a brand name, and a destination name. The advertisement image may change based on a current position of the moving robot. The method may further comprise acquiring an image of a user through a camera; and determining an age and a sex of the user based on the acquired image. The advertisement image may be changed depending on the determined age and sex of the user. The method may further comprise displaying a guidance information screen including destination information, navigation information of a map screen, information about a remaining distance based on the destination information, and information about a remaining time based on the destination information. The advertisement image may be displayed on the map screen. The method may further comprise transmitting the predetermined keyword to a server; and receiving an advertisement image corresponding to the predetermined keyword from the server. The advertisement image may be changed depending on a guidance region, which is selected from among a plurality of guidance regions based on a current position of the moving robot.

### BRIEF DESCRIPTION OF THE DRAWINGS

The embodiments will be described in detail with reference to the following drawings in which like reference numerals refer to like elements wherein:
FIG. 1 is a perspective view of a guidance robot according to an embodiment of the present disclosure;
FIG. 2 is a perspective view showing the bottom of the guidance robot;
FIG. 3 is a side view of the guidance robot;
FIG. 4 is an exploded perspective view of the guidance robot;
FIG. 5 is a perspective view a body of the guidance robot;
FIG. 6 is a side view of the body;
FIG. 7 is an exploded perspective view of the body;
FIG. 8 is a view showing a motor and wheels of the driving unit of the body;
FIG. 9 is a view showing the arrangement of displays of the moving robot according to the embodiment of the present disclosure;
FIG. 10 is a block diagram showing the control relationship between main components of the moving robot according to the embodiment of the present disclosure;
FIG. 11 is a reference view illustrating a standby screen according to an embodiment of the present disclosure;
FIG. 12 is a reference view illustrating an advertisement screen displayed in a standby state according to an embodiment of the present disclosure;
FIG. 13 is a flowchart showing a method of operating the moving robot according to an embodiment of the present disclosure;
FIG. 14 is a flowchart showing a method of operating the moving robot according to another embodiment of the present disclosure; and
FIGS. 15 to 24 are reference views illustrating the method of operating the moving robot according to the embodiment of the present disclosure.

### DETAILED DESCRIPTION

Reference will now be made in detail to embodiments, examples of which are illustrated in the accompanying drawings. However, the present disclosure may be embodied in many different forms and should not be construed as being limited to the embodiments set forth herein.

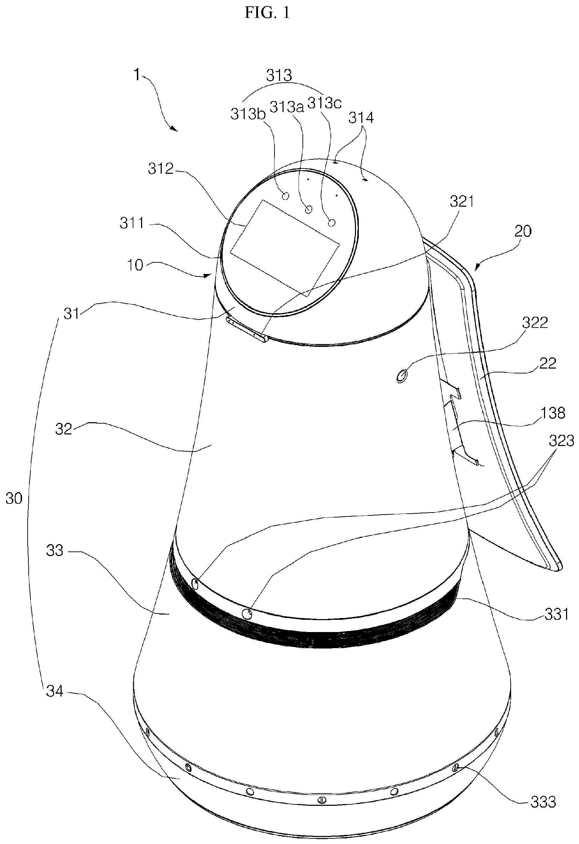

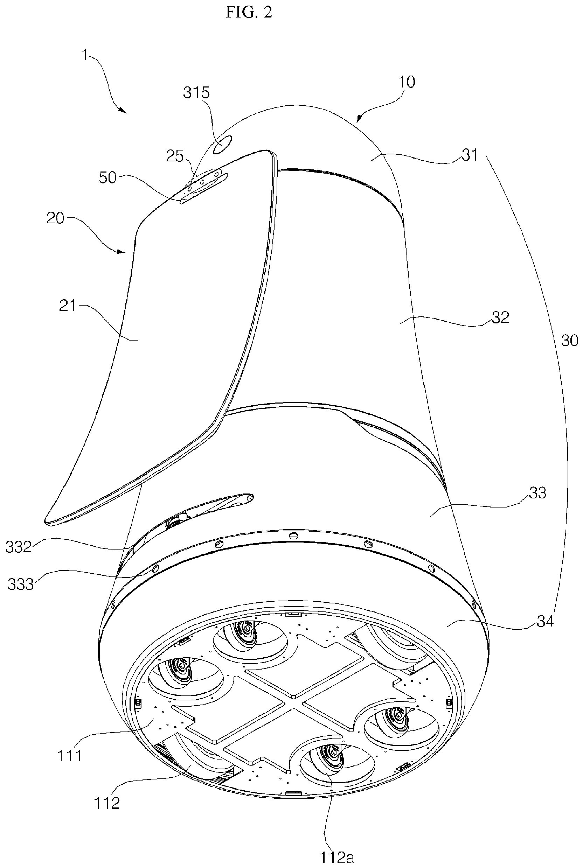

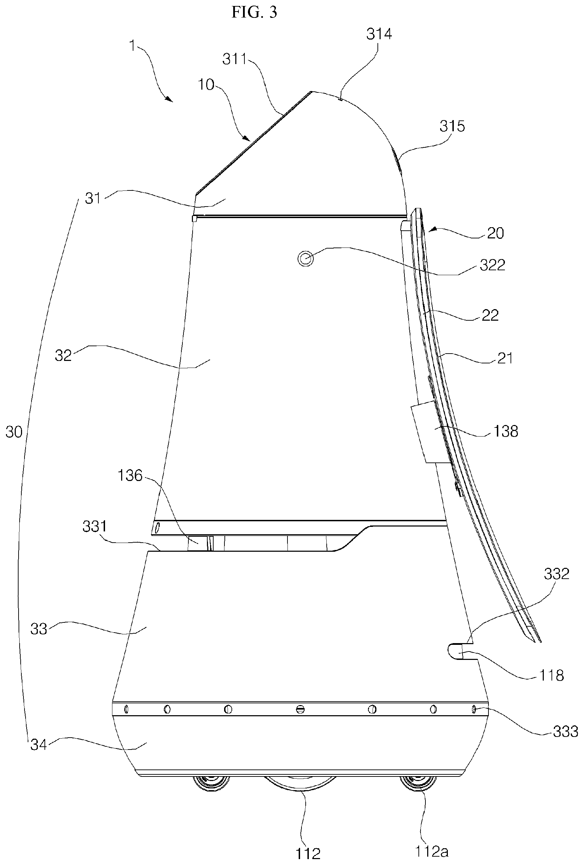

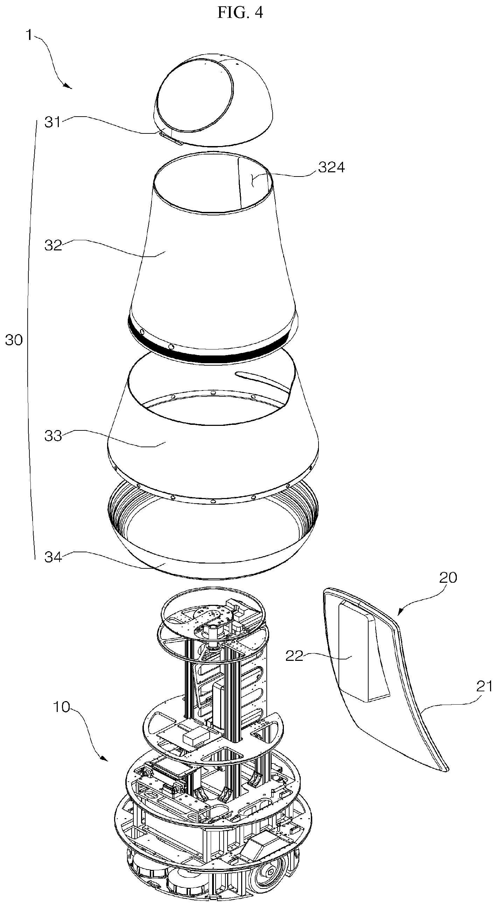

Referring to FIGS. 1 to 4, a guidance robot 1 according to the present disclosure may include a body 10 and a display unit 20. The body may vertically extend or elongated, and may have a roly poly or tumbler shape which becomes slimmer as it goes from a lower portion to an upper portion as a whole. The body 10 may include a case 30 defining an outer appearance of the guidance robot 1.

The case 30 may include a top cover 31 arranged on an upper side of the case 30, a first middle cover 32 arranged below the top cover 31, a second middle cover 33 arranged below the first middle cover 32, and a bottom cover arranged below the second middle cover 33. The first middle cover 32 and the second middle cover 33 may be named a "middle cover".

The top cover 31 may be located at the top or uppermost end of the guidance robot 1, and may have a semispherical shape or a dome shape. The top cover 31 may be located at a height (for example, 132 to 152 cm) that is lower than a height of an adult to easily receive input or a command from the user. Further, the top cover 31 may have a tilted surface of a predetermined angle.

The top cover 31 may include a manipulation or operation unit 311 on one side of the front surface thereof. The manipulation unit or a user interface 311 may function to receive input of a command from the user. The manipulation unit 311 may include a touch monitor 312 configured to receive a touch input from the user. The touch monitor 312 may include a touch panel configured to receive input of the user, and a monitor to display information.

The manipulation unit 311 may face the upper side at a specific inclined angle such that the user may easily manipulate the touch monitor 312 while looking down the touch monitor 312. For example, the manipulation unit 311 may be arranged on a surface formed by cutting a portion of the top cover 31 or pre-formed holes. The touch monitor 312 may be inclined.

A direction in which the manipulation unit 311 faces with reference to FIG. 1 is defined as a "front side". Further, an opposite direction to the manipulation unit 311, that is, a direction in which the display unit 20 faces, is defined as a "rear side".

The manipulation unit 311 may further include an object recognition sensor 313. The object recognition sensor 313 may be arranged on an upper side of the touch monitor 312. The object recognition sensor 313 may include a 2D camera 313a and RGBD (Red, Green, Blue, Distance) sensors 313b and 313c. The 2D camera 313a may be a sensor configured to recognize a person or an object based on a 2D image.

The RGBD sensors 313b and 313c may be sensors configured to acquire a location/position or a facial image of a person. The RGBD sensors 313b and 313c may be sensors configured to detect a person or an object by using captured images having depth data, which are acquired by a camera having RGBD sensors or another similar 3D imaging device.

The plurality of RGBD sensors 313b and 313C may be configured to accurately detect the location or the facial image of the person. For example, the two RGBD sensors 313b and 313c may be configured, and may be arranged on the left side and the right side of the 2D camera 313a, respectively. Although not illustrated, the manipulation unit 311 may further include a physical button configured to directly receive input of a command from the user. The top cover 31 may further include microphones 314. The microphones 314 may function to receive input of a command of an audio signal from the user. For example, the microphones 314 may be formed at four points at an upper end of the top cover 31 to accurately receive a voice command from the user. Thus, even when the guidance robot 1 is driven or the top cover 31 is rotated, a vocal route guidance request may be accurately received from the user.

In the present embodiment, the top cover 31 may be rotated such that the manipulation unit 311 faces a driving or a movement direction while the guidance robot 1 is driven. Further, the top cover 31 may be rotated such that the manipulation unit 311 faces a location in which the user is located, when the guidance robot 1 receives a command or instruction (for example, a voice command, and the like) from the user while being driven.

Dissimilar to this, the top cover 31 may be rotated in an opposite direction to the driving direction of the guidance robot 1 when the guidance robot 1 receives a command from the user while being driven. The top cover 31 may be rotated toward the display unit 20, and the user may effectively manipulate the manipulation unit 311 while viewing route guidance service information displayed on the display unit 20.

Meanwhile, in a state in which the guidance robot 1 is driven or stopped, a direction to which the manipulation unit 311 is directed and a direction to which the display unit 20 is directed may be opposite to each other. In this case, for example, because the manipulation unit 311 faces one direction, and the display unit 20 may face an opposite direction to the one direction, there is an advantage in that information displayed on the manipulation unit 311 or the display unit 20 may be viewed in opposite directions.

The top cover 31 may further include an emergency manipulation button 315. The emergency manipulation button 315 may function to immediately stop an operation of the guidance robot 1 while the guidance robot 1 is stopped or driven. For example, the emergency manipulation button 315 may be located on a rear side of the guidance robot 1 such that the user may easily manipulate the emergency manipulation button 315 even when the guidance robot 1 is driven toward the front side.

The first middle cover 32 may be located below the top cover 31. Various electronic components including a substrate for electronic components may be located inside the first middle cover 32. The first middle cover 32 may have a cylindrical shape, a diameter of which is increased as it goes from the upper side to the lower side.

The first middle cover 32 may include an RGBD sensor 321. The RGBD sensor 321 may function to detect collision between the guidance robot 1 and an obstacle while the guidance robot 1 is driven. The RGBD sensor 321 may be located in a direction in which the guidance robot 1 is driven, that is, on a front side of the first middle cover 32. As an example, the RGBD sensor 321 may be located at an upper end of the first middle cover 32 in consideration of the height of the obstacle or the person existing on the front side of the guidance robot 1. However, although the present disclosure is not limited thereto, the RGBD sensor 321 may be arranged at various locations on the front side of the first middle cover 32.

The first middle cover 32 may further include a speaker hole 322. The speaker hole 322 may be a hole for transferring a sound generated by a speaker to the outside. One speaker hole 322 may be formed on a peripheral surface of the first middle cover 32. However, a plurality of speaker holes 322 may be formed on the peripheral surface of the first middle cover 32 to be spaced apart from each other.

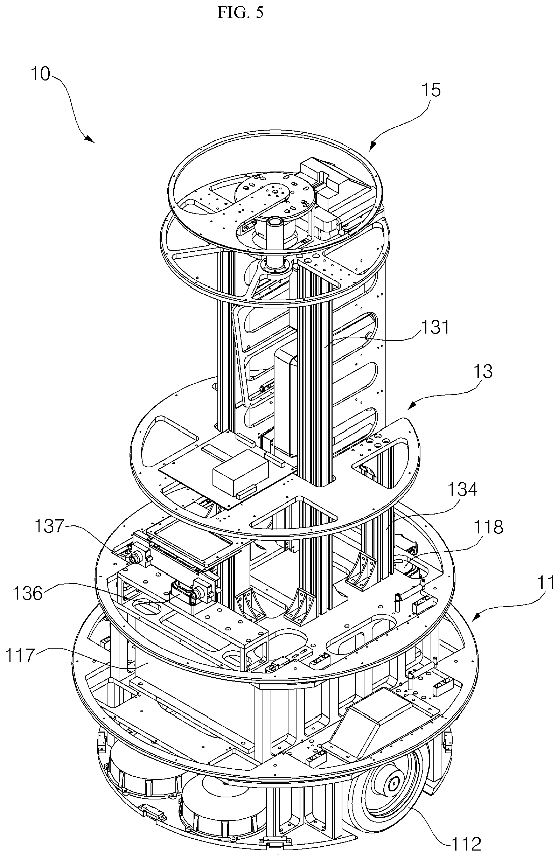

The first middle cover 32 may further include at least one stereo camera hole 323. The stereo camera hole 323 may be a hole for an operation of at least one stereo camera (indicated by reference numeral 137 of FIG. 5) installed inside the body 10. As an example, the stereo camera hole 323 may be formed at a lower end of the front side of the first middle cover 32. Accordingly, the stereo camera 137 may photograph a front area of the guidance robot 1 through the stereo camera hole 323.

The second middle cover 33 may be located below the first middle cover 32. A battery, a lidar for autonomous driving, and the like may be located inside the second middle cover 33. The second middle cover 32 may have a cylindrical shape, a diameter of which is increased as it goes from the upper side to the lower side, which is like the first middle cover 32. Further, the outside of the second middle cover 33 may be connected to the outside of the first middle cover 32 without a step. Because the outside of the second middle cover 33 and the outside of the first middle cover 32 may be smoothly connected to each other, an outer appearance may be more aesthetically pleasing.

Further, the first middle cover 32 and the second middle cover 33 may have cylindrical shapes, diameters of which are increased as they go from the upper side to the lower side, and thus, may have a roly poly or tumbler shape as a whole. When the body 10 collides with the person or the obstacle, a generated impact may be reduced.

The second middle cover 33 may include a first cutout 331 (or first opening or a first slit). The first cutout 331 may be formed from the front side to the lateral sides of a peripheral surface of the second middle cover 33. The first cutout 331 is a portion that is cut from the second middle cover 33 such that a front lidar 136, which will be described below, may be operated. Alternatively, the cutout may be an opening made during fabrication.

In detail, the first cutout 331 may be radially cut in a predetermined length or distance from a front outer peripheral surface of the second middle cover 33. The front lidar 136 may be located inside the second middle cover 33. Further, the first cutout 331 may be formed on the peripheral surface of the second middle cover 33, which corresponds to a position of the front lidar 136, by cutting a periphery of the second middle cover 33. The first cutout 331 and the front lidar 136 may face each other, and the front lidar 136 may be exposed to the outside through the first cutout 331.

As an example, the first cutout 331 may be cut from the front side of the second middle cover 33 along the periphery or circumference of the second middle cover 33 by 270 degrees. The first cutout 331 is formed in the second middle cover 33 to prevent a laser beam emitted from the front lidar 136 from being directly irradiated to eyes of an adult or a child.

The second middle cover 33 may further include a second cutout 332 (or a second opening or a second slit). The second cutout 332 may be formed from the rear side to the lateral sides of the peripheral surface of the second middle cover 33. The second cutout 332 is a portion that is cut from the second middle cover 33 such that a rear lidar 118, which will be described below, may be operated.

The second cutout 332 may be radially cut in a predetermined length from a rear outer peripheral surface of the second middle cover 33. The rear lidar 118 may be located inside the second middle cover 33. The second cutout 332 may be formed at a point which corresponds to a location of the rear lidar 118 by cutting the periphery of the second middle cover 33, and the rear lidar 118 may be exposed to the outside through the second cutout 332. As an example, the second cutout 332 may be cut from the rear side of the second middle cover 33 along the periphery of the second middle cover 33 by 130 degrees. Alternatively, a second opening corresponding to the second cutout 332 may be made during the fabrication of the second middle cover 33.

In the present embodiment, the first cutout 331 may be vertically spaced apart from the second cutout 332 so as not to be connected to the second cutout 332. Further, the first cutout 331 may be located above the second cutout 332.

If the first cutout 331 and the second cutout 332 are located on the same line, a laser beam emitted from a lidar of one guidance robot may be irradiated to a lidar of another guidance robot. Because the laser beams emitted from the lidars of the guidance robots interfere with each other, it is difficult to detect an accurate distance. Because it is not possible to detect a distance between the guidance robot and an obstacle, there is a problem in that it is difficult to perform normal driving, and the guidance robot and the obstacle may collide with each other.

The second middle cover 33 may further include ultrasonic sensors 333. The ultrasonic sensors 333 may be a sensor configured to measure a distance between an obstacle and the guidance robot 1 using an ultrasonic signal. The ultrasonic sensors 333 may function to detect an obstacle that is adjacent (neighboring obstacles) to the guidance robot 1. As an example, the plurality of ultrasonic sensor 333 may be configured to detect obstacles that are adjacent to the guidance robot 1 in all directions. Further, the plurality of ultrasonic sensors 333 may be located along a lower periphery of the second middle cover 33 to be spaced apart from each other.

The bottom cover 34 may be located below the second middle cover 33. Wheels 112, casters 112a, and the like may be located inside the bottom cover 34. The bottom cover 34 may have a cylindrical shape, a diameter of which is decreased as it goes from the upper side to the lower side, which is dissimilar to the first middle cover 32 and the second middle cover 33. The body 10 may have a roly poly or tumbler shape as a whole, so that an impulse or shock applied when a robot collides may be reduced, and a lower end of the body 10 has an inward-depressed structure, so that a foot of a person may be prevented from being caught by wheels of the robot.

A base 111 may be located inside the bottom cover 34. The base 111 may define the bottom surface of the guidance robot 1. Further, the wheels 112 for driving of the guidance robot 1 may be provided in the base 111. One wheel 112 may be located on each of the left and right sides of the base 111.

The casters 112a for assisting the driving of the guidance robot 1 may be provided in the base 111. The plurality of casters 112a may be configured to manually move the guidance robot 1. As an example, two casters 112a may be located on each of the front and rear sides of the base 111.

According to the above-described structure of the casters 112a, there is an advantage in that when the guidance robot 1 is switched off or the guidance robot 1 should be manually moved, the guidance robot 1 may be pushed and moved without applying a large force.

The display unit 20 may vertically extend from one side of the guidance robot 1. The display unit 20 may include a curved display 21. The curved display 21 may be located on a rear side of the first middle cover 32. The curved display 21 may function to output visual information (for example, airport gate inquiry information, route guidance service information, and the like) related to a service being currently provided.

Further, the curved display 21 may have a shape that is outwards curved at a predetermined curvature. The curved display 21 may have a generally concave shape. The curved display 21 may have a shape that is further inclined or curved rearward as it goes from the upper side to the lower side. In other words, the curved display 21 may become farther away from the case 30 as it goes from the upper side to the lower side.

According to the above-described structure of the display unit 20, there is an advantage in that information displayed on the curved display 21 is seen well even at a location that is far from the guidance robot, and the information displayed on the curved display 21 is seen even at various angles without distortion as well.

The guidance robot 1 may move along a predetermined path to guide the user through a way. Further, the user may view the display unit 20 installed on the rear side of the guidance robot 1 while following the guidance robot 1. Even when the guidance robot 1 is driven for route guidance, the user may easily view information displayed on the display unit 20 while following the guidance robot 1.

Further, an upper end of the curved display 21 may extend to an upper end of the first middle cover 32, and a lower end of the curved display 21 may extend to the second cutout 332. In the present embodiment, the lower end of the curved display 21 may be formed so as not to further extend from the second cutout 332. When the curved display 21 covers the second cutout 332, the laser beam emitted from the rear lidar 118 strikes the lower end of the curved display 21. Accordingly, a problem may occur in which the guidance robot 1 cannot detect a distance between the guidance robot 1 and a rear obstacle.

Further, the display unit 20 may further include a support part 22 or display support. The support part 22 may function to support the curved display 21 such that the curved display 21 is located on the rear side of the first middle cover 32. The support part 22 may extend from the rear surface of the curved display 21. The support part 22 may vertically extend from the rear surface of the curved display 21, and may further protrude as it goes from the upper side to the lower side.

Further, the support part 22 may be inserted into the first middle cover 32 through the rear side of the first middle cover 32. An opening 324 through which the support part 22 may pass may be formed on the rear side of the first middle cover 32. The opening 324 may be formed by cutting a portion of the rear side of the peripheral surface of the first middle cover 32 or pre-made during fabrication.

Further, the display unit 20 may be fixed to an inside of the body 10 through a separate fixing member 138 (or a holder). In detail, the fixing member 138 configured to fix the display unit 20 to the body 10 may be provided inside the body 10. One side of the fixing member 138 may be fixed to the body, and the other side of the fixing member 138 may be fixed to the display unit 20. To this end, the other side of the fixing member 138 may protrude to the outside of the case 30 through the opening 324. That is, the support part 22 and the fixing member 138 may be located inside the opening 324 together.

In the present embodiment, the display unit 20 may be fastened to the fixing member 138 through a fastening unit (or fasteners). At this time, the support part 22 of the display unit 20 may be seated on the fixing member 138. In other words, the display unit 20 may be seated on the fixing member 138, and a portion of the fixing member 138 may be fixed to a portion of the display unit 20. According to such a fixing structure of the display unit 20, the display unit 20 may be stably located or maintained on the rear side of the first middle cover 32.

The body display unit 20 may further include a ticket slot 50. In this embodiment, the ticket slot 50 is formed in the body display unit 20. However, the present disclosure is not limited thereto. The ticket slot 50 may be formed in any other region of the moving robot 1. According to an embodiment of the present disclosure, when a ticket, such as an airline ticket, is inserted into the ticket slot 50, the moving robot 1 may scan a barcode or a QR code included in the ticket. In addition, the moving robot 1 may display the scanning result, and may provide the user with gate information, counter information, etc. based on the scanning result.

The body display unit 20 may further include a body camera unit 25 for identifying and tracking a person to be guided. The body camera unit 25 may include a 3D sensor, such as an RGBD camera sensor, and may sense whether a person to be guided is present, the distance between the person and the moving robot 1, and the velocity of the person in a guidance mode. In another embodiment, the moving robot 1 may not include the body camera unit 25 but may further include a sensor provided at any other region thereof for identifying and tracking a person to be guided.

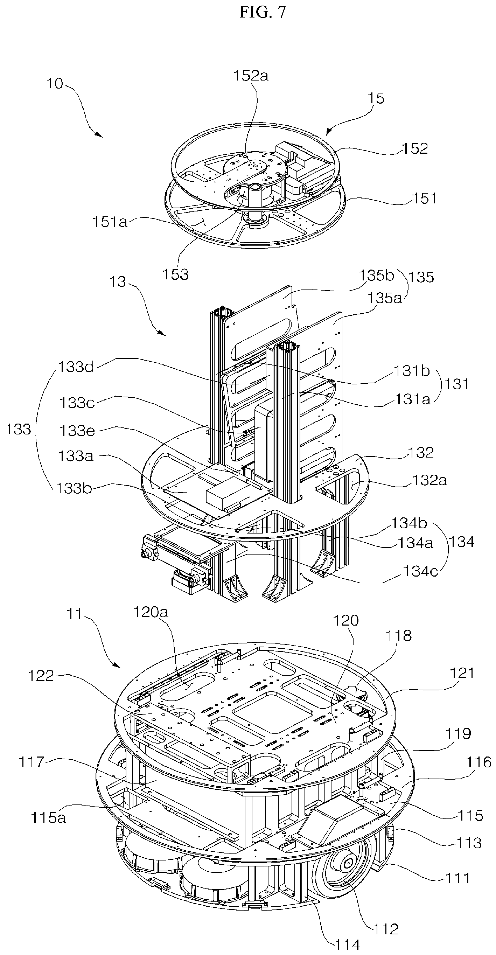

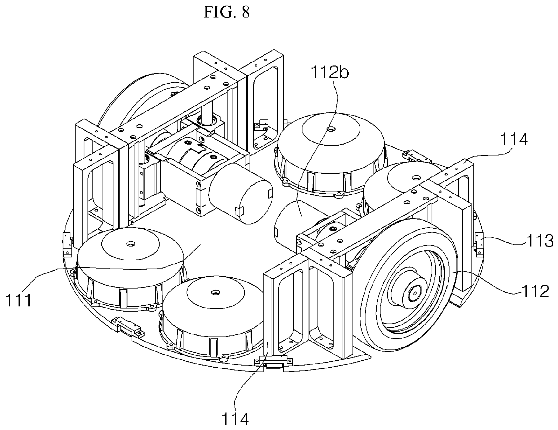

Referring to FIGS. 5 to 8, the body 10 according the present disclosure may include a driving unit 11. The driving unit 11 may include a plurality of components for driving of the guidance robot 1. The driving unit 11 may include the base 111. The base 111 may define the bottom surface of the guidance robot 1. The base 111 may have a circular plate shape, and may be located inside the bottom cover 34.

The driving unit 11 may include at least one wheel 112 for driving of the guidance robot 1, and motors 112b configured to transfer power to the wheels 112. The wheels 112 may be rotated by the power transferred from the motors 112b. The pair of wheels 112 may be configured, and one wheel 112 may be arranged on each of the left and right sides of the base 111. The pair of motors 112b may be configured, and may be coupled to the pair of wheels 112, respectively. However, the present disclosure is not limited thereto, e.g., one motor 112b may be configured to drive the pair of wheels 112.

The driving unit 11 may further include cliff detection sensors 113. The cliff detection sensors 113 may be sensors configured to detect a precipice, a cliff or a steep slope within a driving range of the guidance robot 1 in all direction, 360 degrees. The plurality of cliff detection sensors 113 may be included. As an example, the plurality of cliff detection sensors 113 may be arranged along an edge of the base 111 to be spaced apart from each other.

The driving unit 11 may further include first support ribs 114. The first support ribs 114 may support a first support plate 115, which will be described below. The first support ribs 114 may extend upwards from the upper surface of the base 111. As an example, the first support ribs 114 may extend upwards from an edge of the base 111. The plurality of first support ribs 114 may be included, some of the first support ribs 114 may be hollow or have recessed sides to minimize weight.

In the present embodiment, two first support ribs 114 may be connected to each other in an "L" shape. However, the present disclosure is not limited thereto. Further, the first support ribs 114 may be arranged in various positions and shapes.

The driving unit 11 may further include the first support plate 115. The first support plate 115 may be seated on the first support ribs 114. The first support plate 115 may have a plate shape. Further, the first support plate 115 may include volume-reducing holes 115a to minimize a weight. The plurality of volume-reducing holes 115a may be formed on the upper surface of the first support plate 115 to be spaced apart by a predetermined distance from each other.

The driving unit 11 may further include a first bumper 116. When an impact is applied from the outside, the first bumper 116 may be moved forward/rearward to absorb a predetermined amount of impact or shock. The first bumper 116 may have a hollow ring shape, and may be arranged on the upper surface of the first support plate 115.

The driving unit 11 may further include a battery 117. The battery 117 may supply electric power for driving of the guidance robot 1. The battery 117 may be arranged at the center of the upper surface of the first support plate 115 in consideration of a center of gravity of the guidance robot 1. Because the battery 117 has the largest ratio of the entire weight of the guidance robot 1, the battery 117 may be more likely to be located at a lower portion of the body 10. The battery 117 may include a Li-ion battery. However, the present disclosure is not limited thereto. Further, the battery 117 may include other types of batteries in addition to the Li-ion battery.

The driving unit 11 may further include the rear lidar 118 (Light, Detection and Ranging). The rear lidar 118, which is a laser radar, may be a sensor configured to perform location recognition (recognize a location) by irradiating a laser beam and collecting and analyzing a rearwards scattered light beam among light beams absorbed or scattered by an aerosol. The rear lidar 118 may be located on the rear side of the first support plate 115. The rear lidar 118 may be arranged to face the rear side of the guidance robot 1. Further, the rear lidar 118 may be exposed to the outside through the second cutout 332 formed in the second middle cover 33.

The driving unit 11 may further include second support ribs 119. The second support ribs 119 may support a second support plate 120, which will be described below. The second support ribs 119 may extend upwards from the upper surface of the first support plate 115.

The second support ribs 119 may be formed at an edge of the battery 117. As an example, the second support ribs 119 may be formed on opposite sides of the battery 117 to be spaced apart from each other. The plurality of second support ribs 119 may be formed to increase a support force, and upper ends of the plurality of second support ribs 119 may be connected to each other. That is, the second support ribs 119 may have an arc shape. However, the present disclosure is not limited thereto. Further, the second support ribs 119 may have various shapes.

The driving unit 11 may further include the second support plate 120. The second support plate 120 may be seated on the second support ribs 119. The second support plate 120 may have a plate shape. Further, the second support plate 120 may include volume-reducing holes or openings 120a to minimize a weight. The plurality of volume holes 120a may be formed on the upper surface of the second support plate 120 to be spaced apart from each other by a predetermined distance.

The driving unit 11 may further include a second bumper 121. When an impact is applied from the outside, the second bumper 121 may move or deflect in a forward/rearward direction to absorb a predetermined amount of impact, similar to the first bumper 116. The second bumper 121 may have a ring shape, and may be arranged on the upper surface of the second support plate 120.

The driving unit or section 11 may further include a height-adjusting rib 122. The height adjusting rib 122 may provide a predetermined height to the front lidar 136, which will be described below. The height adjusting rib 122 may be arranged below the front lidar 136, and may help to adjust heights of the front lidar 136 and the first cutout 331. The height adjusting rib 122 may extend upwards from the front side of the upper surface of the second support plate 120.

The body 10 may further include a body part, section or assembly 13. The body part 13 may be arranged above the driving unit or section 11, and various substrates 133 configured to control an overall operation of the guidance robot 1 may be provided in the body part 13. The substrates 133 may include a first substrate 133a, a second substrate 133b, a third substrate 133c, a fourth substrate 133d, and a fifth substrate 133e.

The body part 13 may include a main frame or main pillar 131. The main frame 131 may support the display unit 20 and a head 15, which will be described below. The main frame 131 may include a first main frame or pillar 131a and a second main frame or pillar 131b. The first main frame 131a and the second main frame 131b may have a column shape that extends vertically. The first main frame 131a and the second main frame 131b may be fixed to the upper surface of the second support plate 120.

As an example, the first main frame 131a and the second main frame 131b may be spaced apart from the center toward opposite sides of the second support plate 120 by the same interval or distance. The first main frame 131a and the second main frame 131b may be bilaterally symmetric to each other with respect to the center of the second support plate 120. Further, the head 15 may be coupled to upper ends of the first main frame 131a and the second main frame 131b.

The body part 13 may further include a third support plate 132. The third support plate 132 may be penetrated by the main frame 131, and may be fitted in any point of the main frame 131. The third support plate 132 may be located below a bisector with respect to a point bisecting the main frame 131, i.e., divides the main frame 131 into two equal parts. The third support plate 132 may has a disc shape, and may include volume-reducing holes or openings 132a to minimize a weight.

The body part 13 may further include the first substrate 133a. The first substrate 133a may be arranged on the upper surface of the third support plate 132. The first substrate 133a may include, for example, an application processor (AP) board. The AP board may function as a control unit or controller, configured to manage the entire system of a hardware module of the guidance robot 1.

The body part 13 may further include a sub frame 134. The sub frame or sub pillar 134 may be formed below the third support plate 132, and may function to support the third support plate 132. The sub frame 134 is formed to be lower than the height of the main frame 13.

The sub frame 134 may include a first sub frame or sub pillar 134a and a second sub frame or sub pillar 134b. The first sub frame 134a and the second sub frame 134b may have a column shape that extends vertically. Further, the first sub frame 134a and the second sub frame 134b may be fixed to the upper surface of the second support plate 120.

The first sub frame 134a and the second sub frame 134b may be arranged to be adjacent to the main frame 131. As an example, the first sub frame 134a and the second sub frame 134b may be spaced rearwards apart from the first main frame 131a and the second main frame 131b by the same interval, respectively. The first sub frame 134a and the second sub frame 134b may be bilaterally symmetric to each other with respect to the center of the second support plate 120. Further, the third support plate 132 may be coupled to upper ends of the first sub frame 134a and the second sub frame 134a.

The sub frame 134 may further include a third sub frame or sub pillar 134c. The third sub frame 134c may have a column shape that extends vertically. Further, the third sub frame 134c may be fixed to the upper surface of the second support plate 120, similar to the first sub frame 134a and the second sub frame 134b.

The third sub frame 134c may be arranged to be adjacent or close to the main frame 131. As an example, the third sub frame 134c may be spaced forwards apart from the center of the second support plate 120 by a predetermined distance. The third sub frame 134c may be located in front of the second support plate 120 in consideration of the center of gravity of the third support plate 132. Further, the third support plate 132 may be coupled to an upper end or top of the third sub frame 134c.

The body part 13 may further include a bracket 135. The bracket 135 may have a plate shape, may vertically extend, and may be coupled to the main frame 131. The bracket 135 may include a first bracket 135a and a second bracket 135b. The first bracket may be coupled to the first main frame 131a, and the second bracket 135b may be coupled to the second main frame 131b. The first bracket 135a and the second bracket 135b may be arranged to face each other. The first bracket 135a and the second bracket 135b may be fixed to surfaces of the first main frame 131a and the second main frame 131b, which face each other.

Further, the first bracket 135a and the second bracket 135b may extend downwards from the upper ends of the first main frame 131a and the second main frame 131b, respectively. Further, a lower portion of the first bracket 135a and a lower portion of the second bracket 135b may pass through the third support plate 132.

The body part 13 may further include the second substrate 133b. The second substrate 133b may be arranged in the first bracket 135a. The second substrate 133b may be arranged at a lower end of the first bracket 135a. The second substrate 133b may include, for example, a micro controller unit (MCU) board. The MCU board may control an overall operation of the guidance robot 1, and may include a memory in which data configured to support various functions of the guidance robot 1 is stored.

The body part 13 may further include the third substrate 133c. The third substrate 133c may be arranged in the first bracket 135a. The third substrate 133c may be arranged on the second substrate 133b. The third substrate 133c may include, for example, a stereo board. The stereo board may process sensing data collected by various sensors and cameras to manage data for recognizing the position of the guidance robot 1 and recognizing an obstacle.

The body part 13 may further include the fourth substrate 133d. The fourth substrate 133d may be arranged in the first bracket 135a. In detail, the fourth substrate 133d may be arranged on the third substrate 133c. The fourth substrate 133d may include, for example, a user interface board. The user interface board may control an operation of a component responsible for input and output of the user.

The body part 13 may further include the fifth substrate 133e. The fifth substrate 133e may be arranged in the second bracket 135b. In detail, the fifth substrate 133e may be arranged inside the second bracket 135b to face the second substrate 133b. The fifth substrate 133e may include, for example, a power board. The power board may perform a control such that electric power of the battery 117 is supplied to the components included in the guidance robot 1.

The present embodiment describes the body part 13 having the five substrates 133a, 133b, 133c, 133d, and 133e. However, the number of the substrates 133 is not limited the above number, and may be smaller or larger than the above number. Further, because the types of the substrates are described as an example, it is apparent that the types of the substrates are not limited to the above-described types of the substrates.

The body part 13 may further include the front lidar 137. The front lidar 137, which is a laser radar, may be a sensor configured to perform location recognition by irradiating a laser beam and collecting and analyzing a rearwards scattered light beam among light beams absorbed or scattered by an aerosol. The front lidar 137 may have the same or similar configuration as that of the rear lidar 118. However, the front lidar 137 may be located on the front side of the second support plate 120. The front lidar 137 may be arranged to face the front side of the guidance robot 1. Further, the front lidar 137 may be exposed to the outside through the first cutout 331 formed in the second middle cover 33. The front lidar 137 may be seated on the height adjusting rib 122 formed in the second support plate 120.

The body part 13 may further include a stereo camera 137. The stereo camera 137 may function to detect an obstacle in front of the guidance robot 1 together with the RGBD sensor 321. The stereo camera 137 may acquire a stereoscopic image using two cameras, and may measure a distance between the guidance robot 1 and the obstacle through the acquired stereoscopic image. As an example, the stereo camera 137 may be located directly above the front lidar 137. The stereo camera 137 may be fixed to one side of the third sub frame 134c. Further, the stereo camera 32 may photograph a front area of the guidance robot 1 through the stereo camera hole 323 formed in the first middle cover 32.

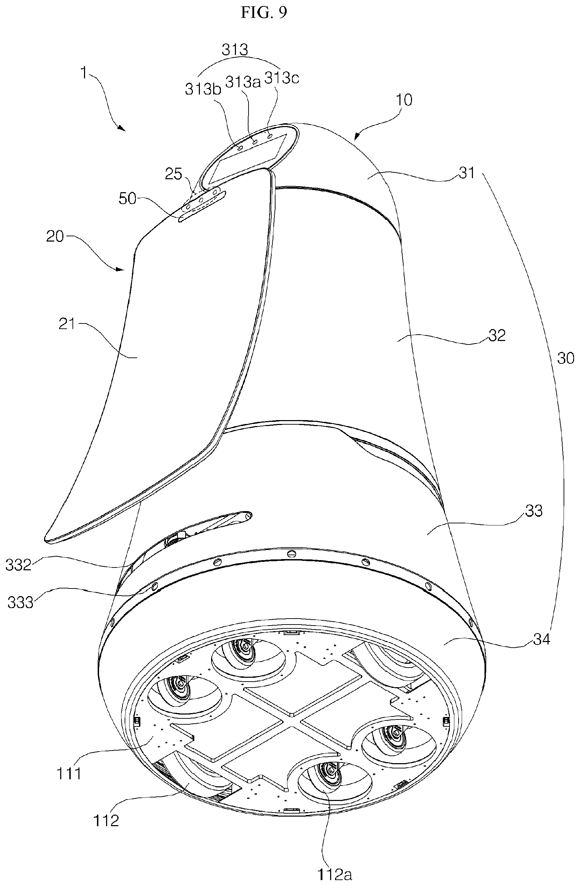

The body 10 may further include head 15. The head or head section 15 may be arranged above the body part 13. Further, the head 15 may be coupled to the top cover 31 and may be configured to rotate the top cover 31. The head 15 may include a stationary unit (Figure 9 to be disused hereinafter) including a fourth support plate 151. The fourth support plate 151 may be seated on an upper end of the main frame 131, and may be coupled to the main frame 131. The fourth support plate 151 may has a disc shape, and may include volume-reducing holes 151a or openings to minimize a weight.

The head 15 may further include a rotation member or a circular rotary unit 152. The rotation member 152 may be arranged on the fourth support plate 151, and may be rotated by a predetermined angle. The rotation member 152 may have a ring shape. Further, the rotation member 152 may be coupled to a rotation motor, which will be described below. The rotation member 152 may include a motor coupling part 152a or a coupler extending from any point of an edge of the rotation member 152 to the center of the rotation member 152. Further, the edge of the rotation member 152 may be coupled to the top cover 31. The top cover 31 may be rotated together by rotation of the rotation member 152.

The head 15 may further include a rotation motor 153. The rotation motor 153 may provide power for rotating the rotation member 152. The rotation motor 153 may have a rotary shaft, and the rotary shaft may be coupled to the motor coupling part. The rotation member 152 may be rotated in one direction or the other direction by driving of the rotation motor 153. The rotation motor 172 may include, for example, a DC motor. However, the present disclosure is not limited thereto, and various motors such as a stepping motor may be applied.

With reference to Figures 1-8, the guide robot may be described as having a main body 10 with an internal skeletal frame covered by a shell 30. The skeletal frame includes a plurality of plates, e.g., plates 111, 115, 120, 132 and 151, stacked vertically and coupled by support ribs 114 and 119, a plurality of pillars 131a and 131b, and/or a plurality of sub-pillars 134a, 134b, and 134c. For example, a first support rib 114 couples a base plate 111 and a first support plate 115, and a second support rib 119 couples the first support plate with a second support plate 120. First, second and third sub-pillars 134a, 134b and 134c couple the second support plate 120 to a third support plate 132. First and second main pillars 131a and 131b couple the second support plate 120 to a fourth support plate 151.

Various components may be mounted between the spaces formed between the plurality of plates 111, 115, 120, 132 and 151. For example, a plurality of wheels 112 and motors 112b to drive the wheels 112 may be provided on the base plate 111 or within a space formed between the base plate 111 and the first support plate 115. A first bumper 116, a battery 117, a rear lidar 118 may be provided on the first support plate 115 or within a space formed between the first base plate 115 and the second support plate 120. On the fourth support plate, a skeletal plate 152 and a motor 153 to rotate the plate 152 may be provided. Details of other components provided on corresponding support plate or within a space between two support plates have been previously described above, and no further explanation is believed to be required. Further, placement and modification of the skeletal frame may be modified based on various needs and functional requirements of the guidance robot. For example, the shape of the support plate may be changed or the number of support plates may be varied. Further, metal or other non-metal rigid material, e.g., plastic, may be used to form the support plates depending on weight and design requirements.

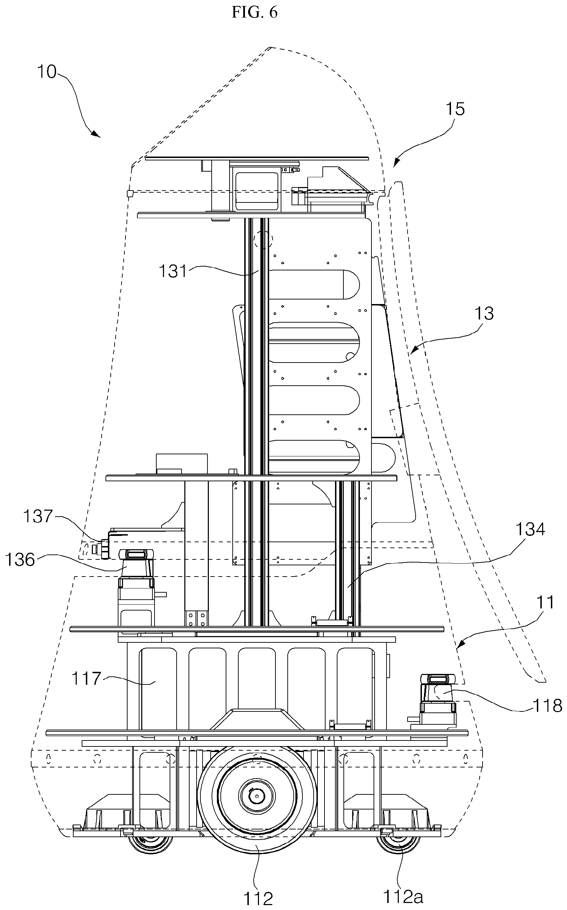

The shell 30 may comprise four pieces including a top section cover 31 a first middle section cover 32, a second middle section cover 33 and a bottom section 34. As can be appreciated, the shell 30 may be formed as a single piece and cut to four separate pieces. Alternatively, the four pieces may be made separately prior to assembly to the skeletal frame. Further, various holes for sensors or button openings may be cut out after the fabrication of the various covers or may be pre-made or molded during the fabrication process. The shell is thereafter fixed to the skeletal frame, and Figure 6 illustrates an outline of the various covers on the skeletal frame.

Referring to FIG. 9, when the moving robot 1 receives a command from the user or is on standby, the displays 312 and 20 may be oriented in one direction such that the user or people in a public place can more easily view information displayed on the displays 312 and 20.

Meanwhile, the manipulation unit 311 and the body display unit 20 may face opposite directions. In this case, for example, the manipulation unit 311 may face one direction, and the body display unit 20 may face the opposite direction. Consequently, information displayed on the manipulation unit 311 and the body display unit 20 may be visible from opposite directions.

While the moving robot 1 is traveling or when the moving robot 1 is standing still, the directions that the manipulation unit 311 and the body display unit 20 face may be changed.

For example, while the moving robot 1 is traveling, the manipulation unit 311 and the body display unit 20 may face opposite directions, as shown in FIG. 1.

When the moving robot 1 is on standby, the manipulation unit 311 and the body display unit 20 may face the same direction, as shown in FIG. 9.

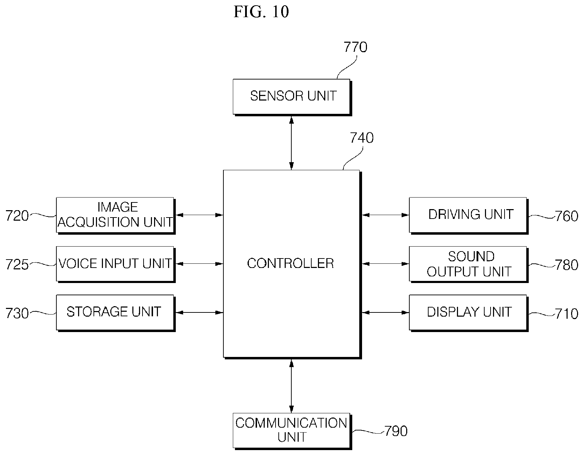

FIG. 10 is a block diagram showing the control relationship between main components of the moving robot according to the embodiment of the present disclosure. The moving robot 1 may include a voice input unit 725 for receiving user voice input through the microphone 314, a storage unit or a memory 730 for storing various kinds of data, a communication unit or module 790 for transmitting and receiving data to and from another electronic device, such as a server (not shown), and a controller 740 for controlling the overall operation of the moving robot 1. The above elements may be mounted on the circuit board 133.

The voice input unit 725 (e.g., microphone) may include or may be connected to a processing unit or a processor for converting an analog sound into digital data, and may convert a user-input voice signal into data that can be recognized by the controller 740 or the server (not shown). The controller 740 may control the voice input unit 725, the storage unit 730, and the communication unit 790, in order to control the overall operation of the moving robot 1.

The storage unit 730, which stores various kinds of information necessary to control the moving robot 1, may include a volatile or nonvolatile recording medium or memory. The recording medium may store data that can be read by the microprocessor. The recording medium may include a hard disk drive (HDD), a solid-state disk (SSD), a silicon disk drive (SDD), a ROM, a RAM, a CD-ROM, a magnetic tape, a floppy disk, and an optical data storage device. The storage unit 730 may store various kinds of data necessary for the moving robot 1 to provide guidance service.

The controller 740 may transmit the state of operation of the moving robot 1 or the user input to the server via the communication unit 790. The communication unit 790 may include at least one communication module, and enables the moving robot 1 to be connected to the Internet or another designated network therethrough.

The storage unit 730 may store data for voice recognition, and the controller 740 may process the user-input voice signal received through the voice input u nit 725 and perform a voice recognition process. The controller 740 may control the moving robot 1 to perform a predetermined operation based on the voice recognition result.

For example, in the case in which a command included in the voice signal is a command for requesting predetermined information, such as airplane departure information or tour guidance information, the controller 740 may perform control such that the predetermined information, such as airplane departure information or tour guidance information, is displayed on a display unit 710. In addition, when the user requests guidance, the controller 740 may perform control such that the user can be escorted to the destination selected by the user.

The voice recognition process may not be performed by the moving robot 1, but may be performed by the server. In this case, the controller 740 may control the communication unit 790 such that the user-input voice signal is transmitted to the server, and may receive the recognition result of the voice signal from the server via the communication unit 790. Alternatively, simple voice recognition, such as the recognition of a hailing command, may be performed by the moving robot 1, and complicated voice recognition, such as the processing of complex phrases, may be performed by the server.

The moving robot 1 may include a display unit 710 for displaying predetermined information as an image and a sound output unit 780 for outputting predetermined information as a sound. The display unit 710 may display information corresponding to a user-input request, a processing result corresponding to the user-input request, an operation mode, an operating state, an error state, etc. as images. As described above with reference to FIGS. 1 to 8, the display unit 710 may include a head display 312 and a body display 21. Since the body display 21 is realized so as to have a larger screen than the head display 312, information may be displayed on the larger screen of the body display 21.

The sound output unit 780 may output an announcement message, such as a warning sound, an operation mode, an operating state, or an error state, information corresponding to a user-input request, a processing result corresponding to the user-input request, etc. as a sound under the control of the controller 740. The sound output unit 780 may convert an electrical signal from the controller 740 into an audio signal, which may be output. To this end, a speaker may be provided.

The moving robot 1 may include an image acquisition unit or processor 720 for capturing a predetermined range. The image acquisition unit 720, which captures the surroundings of the moving robot 1, the external environment, etc., may include a camera module. A plurality of cameras may be installed at each region in order to improve capturing efficiency. For example, as described above with reference to FIGs. 1 to 8, the image acquisition unit 720 may include a head camera 313 for recognizing a person and an object and a body camera 25 for identifying and tracking a person to be guided. However, the number, arrangement, kind, and capturing range of cameras included in the image acquisition unit 720 are not limited thereto.

The image acquisition unit 720 may capture an image for user recognition. The controller 740 may determine the external situation or recognize a user (a person to be guided) based on the image captured and acquired by the image acquisition unit 720. The controller 740 may perform control such that the moving robot 1 travels based on the image captured and acquired by the image acquisition unit 720. The image captured and acquired by the image acquisition unit 720 may be stored in the storage unit 730.

The moving robot 1 may include a driving unit or mechanism 760 for the movement thereof. The driving unit 760 may correspond to the driving unit 11 described with reference to FIGS. 1 to 8. The driving unit 760 may move the main body 10 under the control of the controller 740.

The moving robot 1 may include a sensor unit or assembly 770 including sensors for sensing various kinds of data related to the operation and state of the moving robot 1. The sensor unit 770 may include an obstacle sensor for sensing an obstacle. The obstacle sensor may include an infrared sensor, an ultrasonic sensor, an RF sensor, a geomagnetic sensor, or a position sensitive device (PSD) sensor. For example, the obstacle sensor may correspond to the ultrasonic sensor 333 or the RGBD sensor 321, described with reference to FIGS. 1 to 8. The sensor unit 770 may further include a cliff sensor 113 for sensing if there is a cliff in the floor within the traveling range of the moving robot 1.

In another embodiment, the sensor unit 770 may further include a sensor for sensing the magnitude of a sound acquired by the microphone 314. Consequently, the sensor unit 770 may sense the magnitude of a user's voice and the magnitude of surrounding noise. Alternatively, no additional sensor is included, but the voice input unit 725 may determine the magnitude of the user's voice and the magnitude of surrounding noise at the time of processing the signal acquired by the microphone 314.

In addition, the sensor unit 770 may include lidars 136 and 118. The lidars 136 and 118 may detect an object, such as an obstacle, based on time of flight (TOF) of a transmission signal and a reception signal or the phase difference between the transmission signal and the reception signal using a laser. The lidars 136 and 118 may also detect the distance to the object, the speed relative to the object, and the position of the object. The lidars 136 and 118 may be provided as some of the elements constituting the obstacle sensor. The lidars 136 and 118 may also serve as sensors for creating a map.

The obstacle sensor senses an object, particularly an obstacle, present in the direction that the moving robot travels (moves), and transmits information about the obstacle to the controller 740. The controller 740 may control the motion of the moving robot 1 depending on the position of the sensed obstacle.

The sensor unit 770 may further include an operation sensor for sensing the operation of the moving robot 1 based on the driving of the main body 10 and output information about the operation of the moving robot 1. For example, a gyro sensor, a wheel sensor, or an acceleration sensor may be used as the operation sensor.

The gyro sensor senses a rotating direction and detects a rotating angle when the moving robot 1 moves in an operation mode. The gyro sensor detects the angular speed of the moving robot 1 and outputs a voltage value proportional to the angular speed. The controller 740 calculates the rotating direction and the rotating angle using the voltage value output from the gyro sensor.

The wheel sensor is connected to each of the left and right wheels to sense the number of rotations thereof. The wheel sensor may be a rotary encoder. The rotary encoder senses and outputs the number of rotations of each of the left and right wheels. The controller 740 may calculate the rotating speed of each of the left and right wheels using the number of rotations thereof. The controller 740 may also calculate the rotating angle using the difference in number of rotations between the left and right wheels.

The acceleration sensor may sense a change in the velocity of the moving robot 1, e.g. a change in the velocity of the moving robot 1 depending on the start, stop, and change in the direction thereof and the collision thereof with an object. The acceleration sensor may be attached adjacent to the main wheel or the auxiliary wheel to detect slippage or idling of the wheel.

The acceleration sensor may be mounted to or in the controller 740 to sense a change in the velocity of the moving robot 1. The acceleration sensor detects the amount of impact depending on the change in the velocity of the moving robot 1 and outputs a voltage value corresponding thereto. Consequently, the acceleration sensor may function as an electronic bumper.

The controller 740 may calculate a change in the position of the moving robot 1 based on the operation information output from the operation sensor. The position is a relative position, which corresponds to an absolute position using the image information. The performance of position recognition of the moving robot using the image information and the obstacle information may be improved through such relative position recognition.

As described with reference to FIGS. 1 to 8, the moving robot 1 according to the embodiment of the present disclosure may include a voice input unit 725 for receiving user voice input, a first display 312 for allowing touch input, a second display 21, which is larger than the first display 312, and a controller 740 for controlling the overall operation of the moving robot 1. For easier touch input, the first display 312 may be positioned higher than the second display 21.

The controller 740 may variously combine the two displays 312 and 21 to provide predetermined information and services. The controller 740 may perform control such that a predetermined screen is displayed on the first display 312 and/or the second display 21 in response to the voice input received through the voice input unit 725 or the touch input received through the first display 312.

The controller 740 may perform control such that the predetermined screen is displayed on at least one of the first and second displays 312 and 21 based on the kind and amount of information included in the displayed screen. The controller 740 may perform control such that information is displayed on an appropriate one of the first and second displays 312 and 21 depending on the amount of information to be provided, whether manipulation is to be performed, etc.

For example, when the moving robot 1 is on standby, the controller 740 may perform control such that a standby screen is displayed on the second display 21, which is larger than the first display 312. The standby screen may include at least one selected from among general guidance information, an official announcement, and predetermined information in a public place in which the moving robot 1 is provided.

In addition, the standby screen may sequentially include a guidance screen of predetermined destinations and an advertisement screen. That is, when the moving robot 1 is on standby, the controller 740 may perform control such that the guidance screen of the predetermined destinations and the advertisement screen are sequentially displayed. In addition, the standby screen may be differently configured depending on the place in which the moving robot 1 is located.

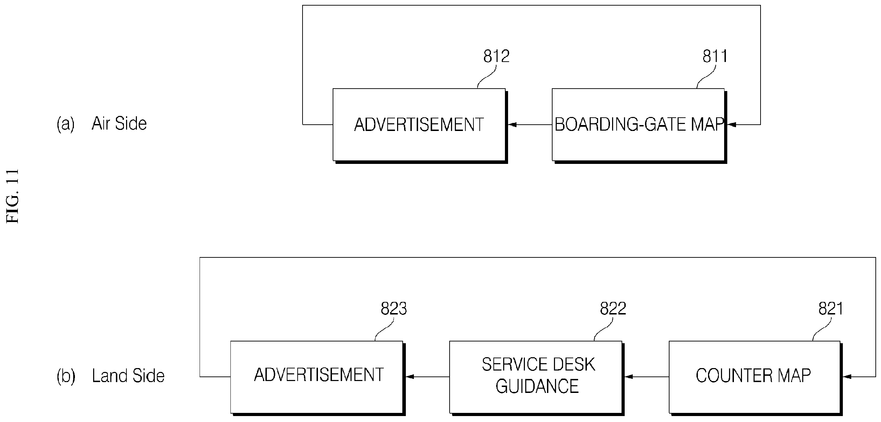

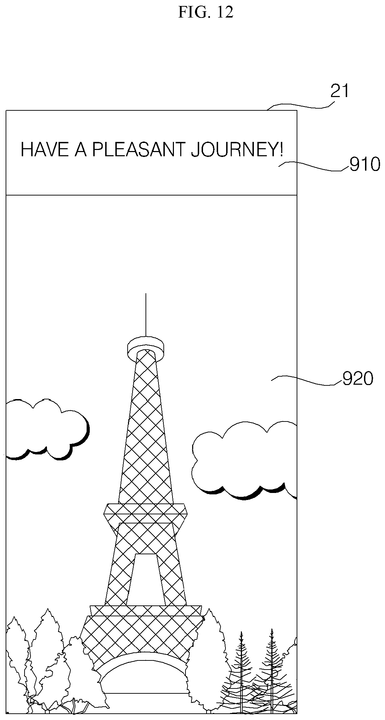

FIG. 11 is a reference view illustrating a standby screen according to an embodiment of the present disclosure, illustrating the case in which the moving robot provides guidance service in an airport. FIG. 12 is a reference view illustrating an advertisement screen displayed in a standby state according to an embodiment of the present disclosure. The moving robot 1 may display different standby screens based on a location of the moving robot 1 at an airport.

For example, on the assumption that a zone that appears after people pass through the immigration desk in an airport is divided into an air side, in which duty-free shops are located, and a land side, which is the remainder of the zone, a standby screen displayed by a moving robot 1 provided on the air side may be different from a standby screen displayed by a moving robot 1 provided on the land side.

Referring to FIG. 11(a), a boarding-gate map screen 811 for showing the position of a boarding gate and an advertisement screen 812 including at least one advertisement image may be sequentially displayed on the second display 21 when the moving robot 1 is located at the air side.

Referring to FIG. 11(b), a counter map screen 821 for guiding the position of a counter on the land side, a service desk guidance screen 822 for airlines, and an advertisement screen 823 including at least one advertisement image may be sequentially displayed on the second display 21 when the moving robot 1 is located at the land side.

The advertisement screens 812 and 823 may be provided based on a contracted advertising content and time. The service desk guidance screen 822 may be provided at higher priority than the counter map screen 821. Depending on the circumstances, the service desk guidance screen 822 and the advertisement screen 823 may be sequentially displayed on the second display 21 when the moving robot 1 is located at the land side.

When the moving robot 1 is on standby, the controller 740 may perform control such that an image showing a facial expression corresponding to the standby state is displayed on the first display 312. The moving robot 1 according to the present disclosure may receive user touch input through the first display 312, or may receive user voice input through the voice input unit 725.

A screen requiring user manipulation may be displayed by default on the first display 312, on which touch input is possible, and a screen having a large amount of information or a screen requiring a large area, such as a map screen, may be displayed by default on the second display 21, which has a larger size than the first display 312. Therefore, the two displays 312 and 21, which have different sizes and functions, such as touch input and voice input, may be combined or interlaced, to conveniently provide various kinds of services to the user.

Referring to FIG. 12, a greeting, an official announcement, another guidance message 910, or an advertisement image 920 may be displayed on the second display 21. In addition, one or more predetermined advertisement images may be reproduced on the entire region of the second display 21 after a guidance screen, such as a boarding-gate map screen 811, a counter map screen 821, or a service desk guidance screen 822 for airlines, is displayed.

Advertising targeting airport users may be provided using the large-sized second display 21 of the moving robot 1 when the robot is on standby in a predetermined place without providing guidance service to a specific user. If advertising is provided to an unspecified number of members of the general public, such as airport users, however, it is difficult for them to be immersed in the advertising and to be interested in the advertising. Furthermore, it is difficult to match intended advertising targets with matters of concern and interest to them. Consequently, the present disclosure proposes a method of providing customized advertising to a user who uses the guidance service of the moving robot 1 and continuously exposing interesting advertising to the user during the guidance.

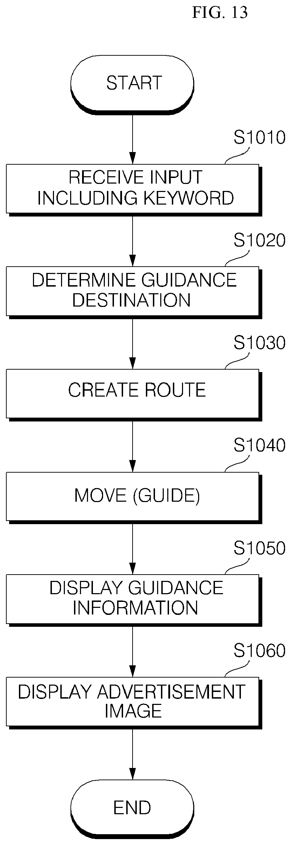

FIG. 13 is a flowchart showing a method of operating the moving robot according to an embodiment of the present disclosure. The moving robot 1 may receive touch input or voice input including a predetermined keyword (S1010), and may determine a guidance destination based on the predetermined keyword (S1020). The moving robot 1 may display a menu screen through the first display 312, and may receive user touch input. In addition, the moving robot 1 may receive and process user voice input through the voice input unit 725.

The predetermined keyword may be at least one selected from among the name of a shop, the name of an item, the name of a brand, and the name of a destination. For example, the predetermined keyword may be the name of a specific duty-free shop, the name of a specific product, or the name of a specific brand. Alternatively, the predetermined keyword may include the name of the destination that the user wishes to find or to be guided to.

At the guidance destination determination step (S1020), the controller 740 may perform retrieval based on the input keyword, may perform control to display the retrieved result on the first display 312, and may determine one that the user confirms or selects from among one or more candidate destinations included in the retrieved result to be the final guidance destination.

For example, upon receiving touch input or voice input including 'duty-free shop A', the controller 740 may retrieve data stored in the storage unit 730, and may control the retrieved result, including information about the position of 'duty-free shop A' and a menu item for requesting guidance service, on the first display 312. Alternatively, the controller 740 may transmit the keyword 'duty-free shop A' to a predetermined server through the communication unit 790 and receive the retrieved result, or may perform retrieval using the Internet.

Meanwhile, the name of a destination such as '11th boarding gate' or 'rest room' may be the keyword. In this case, the controller 740 may retrieve the name of the destination, which is the input keyword, and may provide information about the destination to the user through the first display 312.

When the keyword is input by voice input or touch input, a destination list corresponding to the keyword, the position on a map, and the current position may be displayed on the first display 312, and an entire airport map, the route and distance to the destination corresponding to the keyword, and the estimated time required for arrival may be displayed on the second display 21.

Upon receiving the input of the keyword via voice input or touch input, the controller 740 may perform control such that a detailed screen about a guidance destination corresponding to the input keyword is displayed on the second display 21 and such that a menu item for requesting guidance service (escort service) that guides the guidance destination corresponding to the input keyword while moving to the guidance destination and a guidance message for requesting the confirmation of the destination corresponding to the keyword displayed on the second display 21 are displayed on the first display 312.

A screen including a menu item capable of requesting guidance service by touch input and brief information may be displayed on the first display 312, and a map screen including a guidance destination and a detailed screen including the name and position of the guidance destination and the distance to the guidance destination may be displayed on the second display 21. When a plurality of places is retrieved, the controller 740 may display a plurality of candidate destinations on the first display 312, and may wait for a user selection. When a single place is retrieved, the controller 740 may display a single candidate destination on the first display 312, and may wait for a user confirmation. For example, when the user requests escort service to a specific destination via voice input or touch input, the controller 740 may determine the specific destination to be the final guidance destination.

In addition, the controller 740 may perform control such that the moving robot 1 enters a robot guidance mode in order to provide escort service to the guidance destination while moving to the guidance destination. In the robot guidance mode, the controller 740 may create a route to the determined guidance destination (S1030), and the moving robot 1 may move along the created route (S1040).

The controller 740 may create an entire route from the current position to the determined guidance destination. The entire route may be formed by a plurality of nodes that are sequentially arranged. The controller 740 may create a local route to the next of the nodes included along the entire route. The controller 740 may perform control such that the moving robot 1 moves to the next node along the created local route. The controller 740 may perform control such that the creation of the local route and the movement to the local route are repeated until the moving robot arrives at the guidance destination.

In the robot guidance mode, in which the escort service is provided, various kinds of guidance information may be displayed on the displays 21 and 312 such that the user safely follows the moving robot 1 while the moving robot 1 moves to the guidance destination. For example, when the direction is changed, a screen for showing the direction change may be displayed on the displays 21 and 312. When an obstacle is sensed during the movement of the moving robot and the moving robot pauses, a screen for showing the paused state may be displayed on the displays 21 and 312.

During the movement of the moving robot, a guidance information screen including guidance information, such as the remaining distance to the guidance destination and the remaining time taken to reach the guidance destination, may be also displayed on the displays 21 and 312.

As described with reference to FIGS. 1 to 9, the first display 312 may be provided at the rotatable head. More specifically, the first display 312 may be provided at one side of the top cover 31. The controller 740 may rotate the head during the movement of the moving robot 1. In addition, when the moving robot 1 stops, the controller 740 may rotate the head so as to align the first display 312 and the second display 21 with each other.

While the moving robot 1 is traveling or in the state in which the moving robot 1 is stopped, the first display 312 and the second display 21 may face different directions. For example, when the moving robot 1 is on standby, the first display 312 and the second display 21 may face the same direction, as shown in FIG. 9. In addition, while the moving robot 1 is traveling, the first display 312 and the second display 21 may face opposite directions, as shown in FIG. 1. In this case, various kinds of guidance information displayed in the robot guidance mode may be displayed on the second display 21 (S1050).

In addition, the controller 740 may perform control such that an advertisement image based on the predetermined keyword is displayed on the second display 21 (S1060). According to the present disclosure, the advertisement image may be provided in connection with guidance service. Consequently, it is possible to provide advertising having a high degree of interest based on the keyword input by the user and to continuously display the advertisement to the user following the moving robot 1. The timing and content of advertising may be adjusted in connection with the guidance service.

For example, the advertisement image may be changed depending on the current position of the moving robot. According to the present disclosure, it is possible to provide an advertisement image of a shop near the current position using information about the current position while the escort service is provided, thereby further improving the advertising effects. It is possible to output promotions for shops, such as duty-free shops and banks, in an airport or a location-based advertisement image using the position information while the escort service is provided.

It is also possible to output an advertisement image related to the guidance destination, an airline, or a travel destination a predetermined time before the arrival at the destination or at the time of arrival at the destination. The moving robot 1 according to the present disclosure may analogize a matter of concern and interest to the user based on the keyword input by the user to provide personalized advertising, which may be an effective marketing means. The moving robot may display the matter of concern and interest to the user while escorting the user, whereby a complete advertising story can be provided to the user. The product/service being advertised may be immediately purchased in that place (i.e. the airport), which is still more effective.

The moving robot 1 may also acquire a user image through the image acquisition unit 720, which includes one or more cameras. The controller 740 may determine the age and/or sex of the user based on the image acquired through the image acquisition unit 720. The advertisement image may be changed depending on the determined age and/or sex of the user. The controller 740 may perform control such that an advertisement image of a shop and an item having a high degree of interest is displayed on the second display 21 based on the age and/or sex of the user. The moving robot 1 may recognize the destination keyword retrieved by the user and the sex and age of the user to display an advertisement that the user is expected to be interested in when escorting the user to the destination in a building or a public place.

The moving robot 1 may determine the age and sex of the user using the cameras and analogize the matter of concern and interest to the user and request permission to use the keyword input by the user to provide advertising. In addition, a related advertisement may be displayed while the user moves to a specific place in order to purchase a desired product, thereby improving the attention paid to and effect of the advertisement.

As previously described, a guidance information screen including destination information, navigation information including a map screen, information about the remaining distance, and information about the remaining time may be displayed on the second display 21 while the escort service is provided (S1050). In this case, the advertisement image may be displayed on the map screen.

The advertisement image may be provided based on the current position information. Consequently, advertisement images are displayed at the actual positions of shops on the map screen displayed for guidance such that the user can easily move to the shops being advertised. Advertisement is also displayed during the movement of the moving robot, whereby it is possible to clearly provide the user with the position of a shop where the product/service being advertised can be purchased.

An entrepreneur may directly provide advertising to the target of advertising, whereby personalized transmission of information is possible. The advertisement image may be displayed on the guidance information screen, or may be displayed on a portion of the second display 21 together with the guidance information screen.

In addition, the advertisement image may be displayed on the entire screen of the second display 21 for a predetermined time. For example, when the moving robot approaches a shop corresponding to an advertisement image, the advertisement image may be displayed on the entire screen of the second display 21.

A plurality of advertisement images may be stored in the storage unit 730 in advance, and a desired one of the advertisement images may be displayed on the second display 21 at a specific time under the control of the controller 740. Alternatively, a plurality of advertisement images may be stored in a predetermined server. In this case, the controller 740 may perform control such that the communication unit 790 transmits the predetermined keyword to the server and receives an advertisement image corresponding to the predetermined keyword from the server.

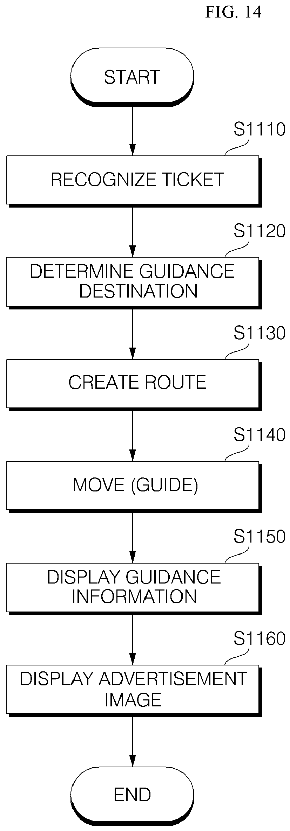

FIG. 14 is a flowchart showing a method of operating the moving robot according to another embodiment of the present disclosure. FIG. 14 shows an embodiment in which a ticket is recognized without a keyword to provide guidance service and advertising, which is substantially identical to the embodiment described with reference to FIG. 13. Hereinafter, therefore, the constituents of FIG. 14 that are similar to those described with reference to FIG. 13 will be simply described.

The moving robot 1 may recognize a ticket inserted into the ticket slot (S1110), and may determine a guidance destination based on the result of ticket recognition (S1120). When a ticket, such as an airline ticket, is inserted into the ticket slot 50, the moving robot 1 may scan a barcode or a QR code included in the ticket to recognize information included in the ticket.

At the guidance destination determination step (S1120), the controller 740 may control the ticket scanning result to be displayed on the first display 312 and/or the second display 21, and may determine the destination according to the ticket scanning result, e.g. a boarding gate, to be the final guidance destination after user confirmation. The controller 740 may create a route to the determined guidance destination (S1130), and may perform control such that the moving robot 1 moves along the created route (S1140). In this embodiment, an advertisement image based on the ticket recognition result may be displayed on the second display 21 (S1160).

At the time of ticket recognition, the destination to which the user is to move to, a movement route, travel information, and flight number information can be recognized through ticket recognition, and it is not necessary to input user's personal information or a keyword. Consequently, customized advertising may be provided to the user based on information acquired by ticket recognition during the guidance. In addition, the timing and content of the advertising may be adjusted in connection with guidance service.

Surrounding shops and products may be publicized when guidance is provided to the user, whereby the advertising effects may be maximized. For example, the advertisement image may be changed depending on the current position of the moving robot. It is possible to provide an advertisement image of a shop near the current position using information about the current position while the escort service is being provided, thereby further improving the advertising effects.

In addition, personalized advertising may be provided to the user while escorting the user, whereby a complete advertising story can be provided to the user. The product/service being advertised may be also immediately purchased in that place (the airport), which is still more effective.

The moving robot 1 may acquire a user image through the image acquisition unit 720, which includes one or more cameras. The controller 740 may determine the age and/or sex of the user based on the image acquired through the image acquisition unit 720. The advertisement image may be changed depending on the determined age and/or sex of the user. The controller 740 may perform control such that an advertisement image of a shop and an item having a high degree of interest is displayed on the second display 21 based on the age and/or sex of the user.

The moving robot 1 may recognize the destination keyword retrieved by the user and the sex and age of the user to display advertisement that the user is expected to be interested in when escorting the user to the destination in a building or a public place. The moving robot 1 may determine the age and sex of the user using the cameras and analogize the matter of concern and interest to the user and request permission to use the keyword input by the user to provide advertisement. Similar advertisement may also be displayed while the user moves to a specific place in order to purchase a desired product, thereby improving the attention paid to and effect of the advertisement.

A guidance information screen including destination information, navigation information including a map screen, information about the remaining distance, and information about the remaining time may be displayed on the second display 21 while the escort service is being provided (S1150). The advertisement image may be displayed on the map screen.

The advertisement image may be provided based on the current position information. Advertisement images may also display at the actual positions of shops on the map screen displayed for guidance.

Advertising is also displayed during the movement of the moving robot, whereby it is possible to clearly provide the user with the position of a shop at which the product/service being advertised can be purchased. An entrepreneur may directly provide advertising to an advertising target, whereby personalized transmission of information is possible.

The advertisement image may be displayed on the guidance information screen, or may be displayed on a portion of the second display 21 together with the guidance information screen. The advertisement image may be displayed on the entire screen of the second display 21 for a predetermined amount of time. For example, when the moving robot approaches a shop corresponding to an advertisement image, the advertisement image may be displayed on the entire screen of the second display 21.

A plurality of advertisement images may be stored in the storage unit 730 in advance, and a desired one of the advertisement images may be displayed on the second display 21 at a specific time under the control of the controller 740.

Alternatively, a plurality of advertisement images may be stored in a predetermined server. In this case, the controller 740 may perform control such that the communication unit 790 transmits the ticket recognition result to the server and receives an advertisement image corresponding to the ticket recognition result from the server.

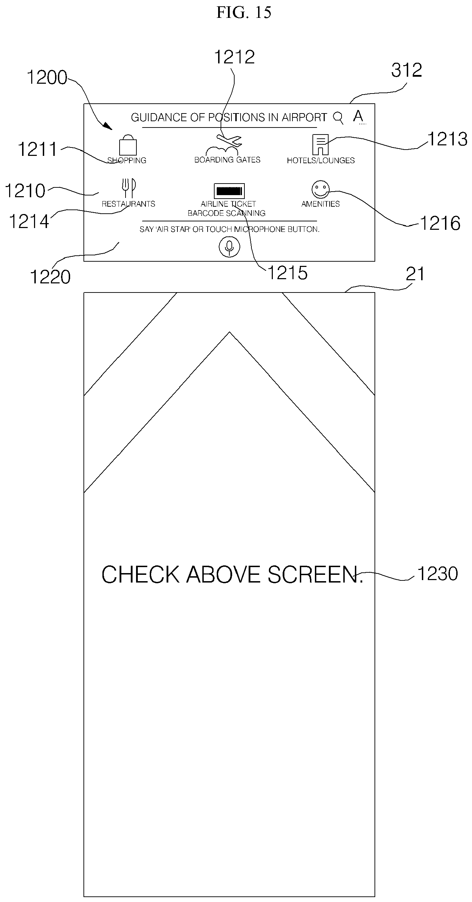

FIG. 15 is a view showing a main screen, and more specifically, FIG. 15 shows a main screen displayed when a moving robot is located at an air side. A main screen 1200 displayed on the first display 312 may include a main menu region 1210 and a voice recognition region 1220.

The main menu region 1210 may include main menu items including category items in which destinations are sorted based on predetermined criteria. For example, the main menu items may include shopping 1211, boarding gates 1212, hotels/lounges 1213, restaurants 1214, airline ticket barcode scanning 1215, and amenities 1216.

The user may select one selected from among the shopping 1211, the circuit boarding gates 1212, the hotels/lounges 1213, the restaurants 1214, the airline ticket barcode scanning 1215, and the amenities 1216 through voice input or touch input, and may find a destination included in the selected category or use a corresponding service.

A voice recognition microphone button or a hailing command inducement guide may be displayed in the voice recognition region 1220. For example, in the case in which 'air star' is set as a hailing command, a hailing command inducement guide to prompt the user to say 'air star' or touch a microphone button may be displayed. When the user utters the hailing command or touches the microphone button in the voice recognition region 1220, the controller 740 may perform control such that a voice recognition process is performed. A screen 1230 for inducing or suggesting the manipulation of the first display 312 may be displayed on the second display 21.

The main screen displayed on the first display 312 when the moving robot is located at the land side may include other main menu items. For example, the main menu items may include roaming, airline counters, and amenities.

When the user selects the airline ticket barcode scanning 1215 from among the main menu items, the controller 740 may perform control such that a screen for showing the insertion of an airline ticket into the ticket slot 50 is displayed on the first display 312. The controller 740 may perform control such that a screen for showing the withdrawal of the ticket is displayed on the first display 312 after the scanning is completed. The moving robot 1 may also display the ticket recognition result on the second display 21, and may provide gate information, counter information, etc. based on the ticket recognition result to the user.

The controller 740 may perform control such that the ticket recognition result is displayed on the first display 312 and such that information about guidance to a destination corresponding to the ticket recognition result is displayed on the second display 21. If the recognition of the ticket, such as the airline ticket, fails, the controller 740 may perform control such that a screen for showing recognition failure is displayed on the first display 312.

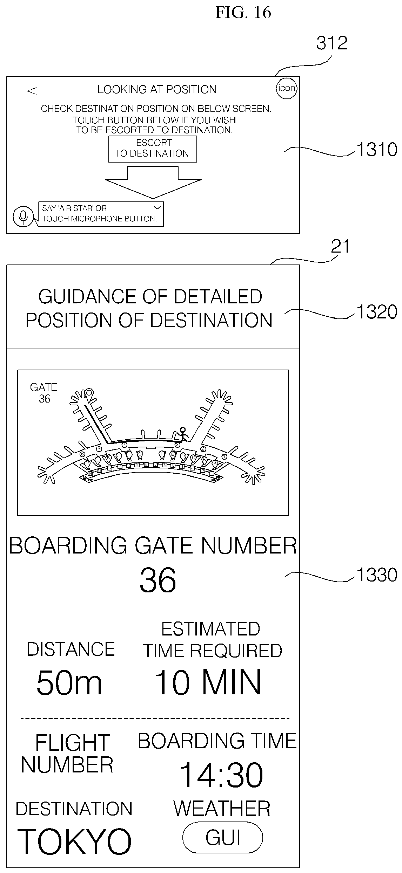

Referring to FIG. 16, the controller 740 may perform control such that a screen for showing the detailed position of a determined destination, e.g. a 36th boarding gate, is displayed on the second display 21 based on the ticket recognition result. The screen for showing the detailed position of the destination may include a use guidance region 1320, in which a title and a manipulation inducement guide are provided, and an information region 1330, in which detailed information is displayed.

A map having position information of the destination, i.e. the 36^{th} boarding gate, indicated thereon, the boarding gate number, information about the route and distance from the current position to the destination, and information about the estimated time required may be displayed in the information region 1330.

In another embodiment, a predetermined advertisement image may be displayed on the map. Alternatively, a predetermined advertisement image may be displayed so as to overlap another portion of the screen for showing the detailed position of the destination. Alternatively, the screen of the second display 21 may be divided into two regions such that the screen for showing the detailed position of the destination and the advertisement image can be respectively displayed in the two divided regions.

Information related to the flight number based on the ticket recognition result, such as weather in the travel destination, local time, and flight time, may be further displayed in the information region 1330. The controller 740 may perform control such that a screen for inducing or suggesting the confirmation of the information displayed on the second display 21 is displayed on the first display 312.

Referring to FIG. 16, the controller 740 may perform control such that the screen displayed on the first display 312 is switched to a screen 1310 including a menu item for requesting guidance service performed while moving to the input guidance destination and a guidance message for inducing or requesting the confirmation of the destination displayed on the second display after a predetermined time. When the user requests the guidance service, the controller 740 may perform control such that the robot guidance mode is performed to guide the user to the guidance destination.

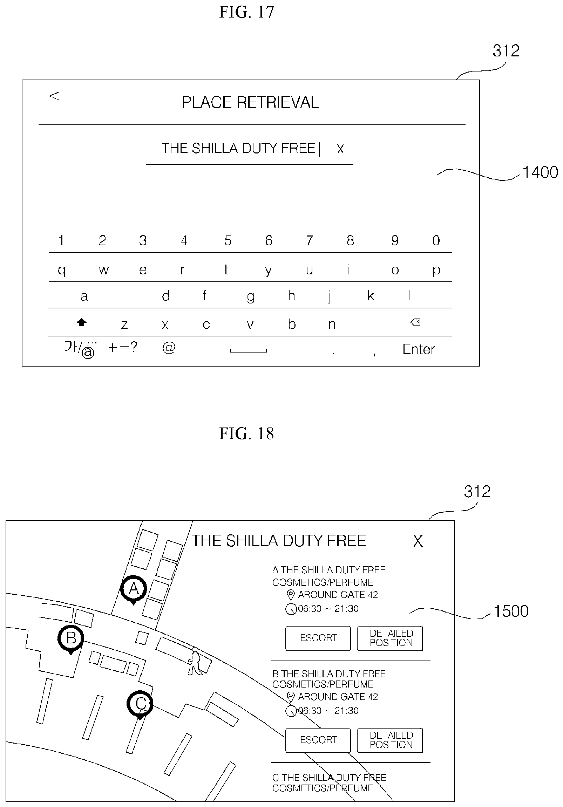

FIG. 17 illustrates a screen displayed when a predetermined category, such as shopping 1211, hotels/lounges 1213, restaurants 1214, or amenities 1216, is selected from among the main menu items. When a predetermined category is selected, the controller 740 may perform control such that a retrieval screen 1400 including a retrieval input window for retrieving a place within the selected category is displayed on the first display 312.

The user may input a predetermined keyword into the retrieval input window included in the retrieval screen 1400 in order to retrieve a destination. Alternatively, the controller 740 may provide items included in the selected category in the form of a list. The controller 740 may also provide a subcategory list in which the items included in the selected category are reclassified based on predetermined criteria, and may provide items included in the selected subcategory list in the form of a list.

For example, when the user selects shopping 1211, 'duty-free shops', 'by item', and 'brands' may be provided as the subcategory list, and the items included in the selected subcategory list may be provided in the form of a list. When the user selects one of the displayed items, the controller 740 may recognize 'duty-free shops', 'by item', and 'brands,' corresponding to the selected item, as a keyword. That is, the keyword input may be performed as selective input of the displayed items.

FIG. 18 shows an example of a retrieved result screen. When one of the provided items is selected or when input through the retrieval input window is completed, the controller 740 may perform control such that a retrieved result screen 1500 is displayed on the first display 312.

The retrieved result screen 1500 may include an airport map having the current position and the positions of the retrieved places indicated thereon and a list in which the retrieved places are sequentially arranged in the descending order of proximity to the current position. The retrieved result screen 1500 may include a detailed position button for confirming detailed information and a button (an escort button) for requesting guidance service.

When the user selects the detailed position button, the entire airport map, the position of the destination, the route to the destination, the current position of the user, and information about the destination (operation time) may be provided through the large-sized second display 21. Even in this case, a predetermined advertisement image may be displayed on the map or another region provided through the second display 21.

When the user selects the escort button, the controller 740 may determine the destination to be the final guidance destination. The controller 740 may perform control such that the entire airport map, the position of the destination, the route to the destination, the current position of the user, and information about the time taken to reach the destination and the distance to the destination are provided through the large-sized second display 21, after which escorting commences.

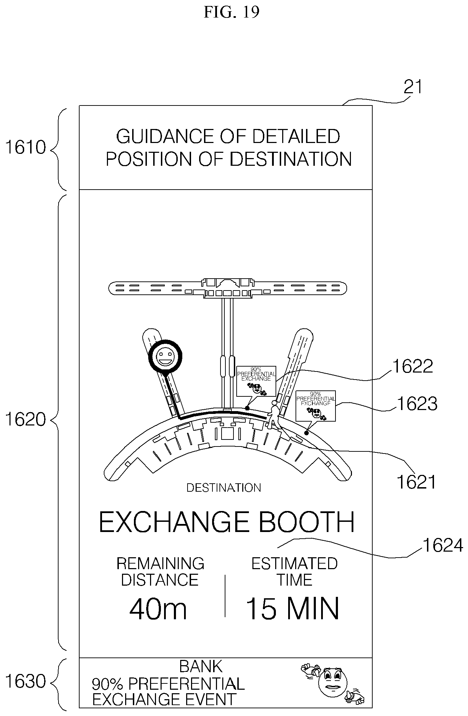

Referring to FIG. 19, in the robot guidance mode, in which the user is escorted to the guidance destination selected by the user, various kinds of guidance information may be displayed on the second display 21 such that the user may check information while following the moving robot 1 when the moving robot 1 moves to the guidance destination. When detailed information and additional information are displayed using the large-sized second display 21, it is possible to provide a larger number of pieces of information through a single screen. Consequently, it is possible for the user to view the entire airport map and thus to easily understand the entire route.

In the robot guidance mode, in which the user is escorted, a guidance information screen including destination information, navigation information including a map screen, information about the remaining distance, and information about the remaining time may be displayed on the second display 21. An image showing a facial expression corresponding to the robot guidance mode, in which the user is escorted, may be displayed on the first display 312.

FIG. 19 illustrates the case in which an exchange booth is selected as the destination. Title information, such as the title 'guidance of detailed position of destination', a message indicating a rotating direction, information about a current position, a message indicating a pause, or an approach inducement message, such as 'follow me', may be displayed on a use guidance region 1610 of the second display 21.

In addition, guidance information 1624, such as navigation information including information about the destination or retrieved result (e.g. an exchange booth) and a map screen, the remaining distance, and the remaining time, may be displayed on an information region 1620 of the second display 21. For the navigation information, the current position 1621 and the position of the destination may be displayed on the map together with a route.

Advertisement images 1622 and 1623 based on position information, such as the current position 1621 and the position of the destination, may be displayed on the map. In this case, the advertisement images 1622 and 1623 may be displayed on the map so as to correspond to positions at which desired products/services can be purchased.

An advertisement image selected based on the destination information may be displayed on a predetermined region 1630 of the second display 21. For example, when the user is guided to an exchange booth, advertisement related to an exchange event of a predetermined bank may be displayed on the region 1630.

The advertisement images 1622 and 1623 based on the position information may be advertisement images of other exchange booths related to the exchange booth, which is the destination. For example, the advertisement images 1622 and 1623 based on the position information may provide advertisement, such as an event and a preferential exchange coupon, of an exchange bank located on the same floor as the exchange booth, which is the destination.

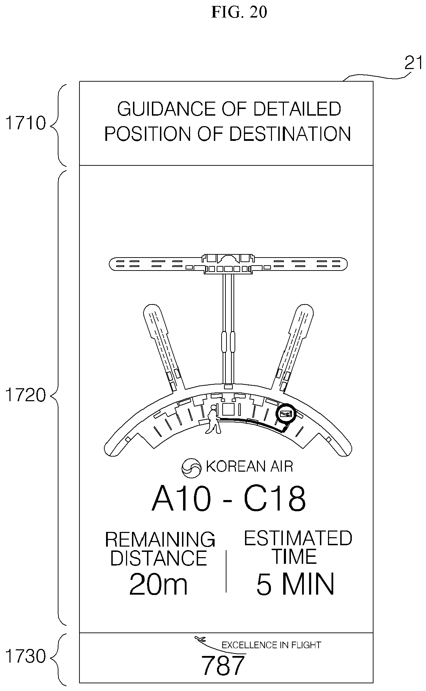

FIG. 20 illustrates the case in which a counter of a predetermined airline is selected as the destination. Title information, such as the title 'guidance of detailed position of destination', a message indicating a rotating direction, information about a current position, a message indicating a pause, or an approach inducement message, such as 'follow me', may be displayed on a use guidance region 1710 of the second display 21.

Guidance information, such as navigation information including information about the destination or retrieved result (e.g. an airline counter) and a map screen, the remaining distance, and the remaining time, may be displayed on an information region 1720 of the second display 21. For the navigation information, the current position and the position of the destination may be displayed on the map together with a route.

In addition, an advertisement image, selected based on the destination information, may be displayed on a predetermined region 1730 of the second display 21. For example, when the user is guided to a ticket counter of a predetermined airline, an advertisement related to an event, a promotion, or a discount ticket of the airline may be displayed in the region 1730.

According to the present disclosure, surrounding shops and products may be publicized when guidance is provided to the user, whereby the advertising effects may be maximized. Necessary information may be selectively provided to the user based on information obtained from the input of the keyword for retrieval and selection of the destination or the ticket recognition result, whereby the user is prevented from being indiscriminately exposed to advertising.

A related advertisement may be also displayed while the user moves to a specific place in order to purchase a product/service, thereby improving the effect of the advertisement. A matter of concern and interest to the user may be found in real time and may be reflected in the advertizing content without using the personal information of the user, such as a resident registration number, passport information, a credit card number, or the name of the user. An entrepreneur (an advertiser) may provide specific advertising to specific targets in order to strategically perform the exposure and advertisement of products.

The moving robot 1 may also determine the age and sex of the user using the cameras and analogize the matter of concern and interest to the user and request permission to use the keyword input by the user or the ticket recognition result in order to provide advertising. In this case, an advertisement image determined based on the age and sex of the user and position information may be displayed on the guidance information screen provided during guidance.

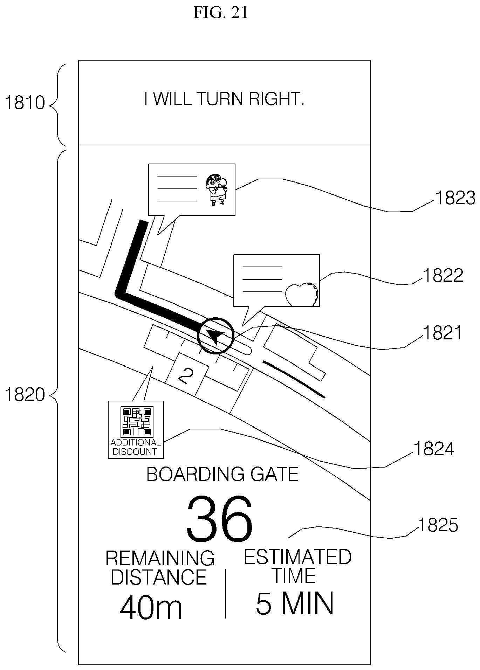

Referring to FIG. 21, the controller 740 may reduce or enlarge a map screen of an information region 1820. For example, the controller 740 may perform control such that the map is enlarged and displayed when the moving robot turns a corner or when a predetermined event occurs. The controller 740 may rotate the map screen of the information region 1820 about the current position.

Referring to FIG. 21, when the moving robot makes a right turn, the controller 740 may perform control such that a message indicating right turn, such as 'I will turn right', is displayed on a use guidance region 1810 of the second display 21 and such that a graphical image (not shown) corresponding to the right turn is displayed on the information region 1820. The controller 740 may perform control such that guidance information 1825, such as the remaining distance to the destination and the remaining time taken to reach the destination, is updated in real time and is displayed on the information region 1820.

The controller 740 may also perform control such that advertisement images 1822, 1823, and 1824 related to shops located within a predetermined distance from the current position 1820 are displayed on the enlarged map displayed on the information region 1820. When the determined destination/sex/age is duty-free shop/male/thirties, the controller 740 may perform control such that advertisement images 1822, 1823, and 1824 showing promotions, discounts, and customer-appreciation discounts related to products for men, alcoholic beverages, cigarettes, and watches of duty-free shops along the route are displayed.

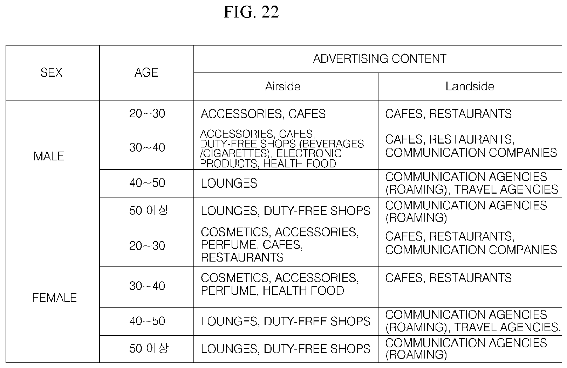

FIG. 22 illustrates advertising content in an airport sorted by the sex and age of users. The advertisement image according to the present disclosure may be displayed on the guidance information screen, or may be displayed on a portion of the second display 21 together with the guidance information screen.

When a female user in her thirties is escorted to a cosmetics store by the moving robot 1 on the air side, advertising for cosmetics that have been sold in the largest numbers may be displayed on a map showing a route.

In addition, when the keyword that the user has used to retrieve and select the destination is the name of a desired shop, such as a duty-free shop, advertising related to the main brand, items, and discount information of the shop may be displayed, or advertising for a similar shop may be displayed.

Alternatively, when the keyword that the user has used to retrieve and select the destination is the name of a desired item, such as an electronic product, advertising related to brands in the same category, popular products in the same category, and discounts may be displayed.

Alternatively, when the keyword that the user used to retrieve and select the destination is the name of a desired brand, advertising related to the brand and events in a shop may be displayed.

Referring to FIG. 22, advertisement images provided through the moving robot 1 according to an embodiment of the present disclosure may differ depending on guidance regions assigned to the moving robot, which are selected from among a plurality of guidance regions. Different kinds of advertisements may be provided depending on guidance regions assigned to the moving robot, which are selected from among a plurality of guidance regions (e.g. an air side and a land side).

In addition, according to an embodiment of the present disclosure, the moving robot 1 may provide the user with advertising selected based on the assigned guidance region and the determined sex and age of the user.

In addition, the advertisement image according to the present disclosure may be displayed on the entire screen of the second display 21, or may be displayed in the state of being enlarged to a predetermined size for a predetermined amount of time. For example, when a shop corresponding to the advertisement image is nearby, the advertisement image may be displayed on the entire screen of the second display 21.

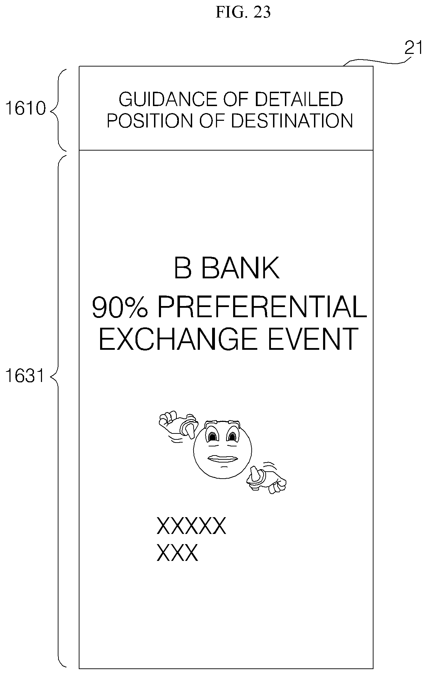

Referring to FIGS. 19 and 23, when a shop corresponding to the advertisement image is nearby, the region 1630 in which the advertisement image is displayed may be enlarged, and the previous advertisement image may still be displayed in the enlarged state in the enlarged region 1631, or a larger number of pieces of information may be displayed on the enlarged region 1631 as the result of enlargement of the region. In another embodiment, the enlarged region 1631 may be maximally enlarged so as to occupy the entire screen of the second display 21.

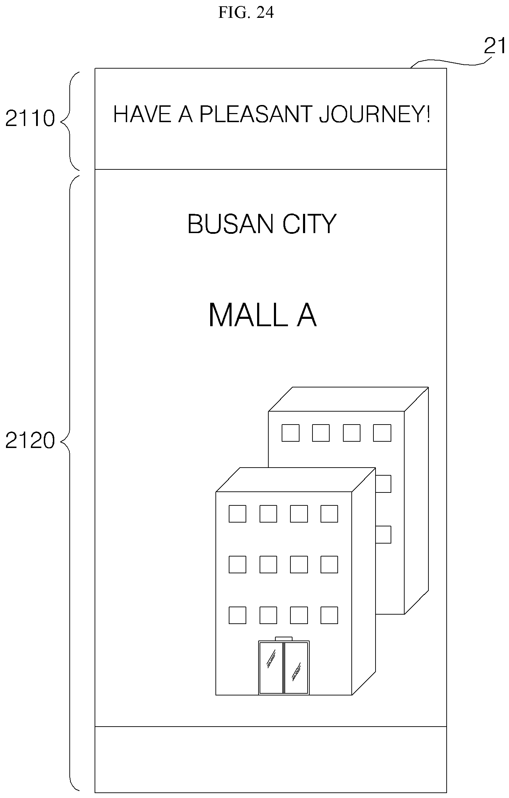

Referring to FIG. 24, when the moving robot 1 arrives at the guidance destination, such as a boarding gate, a greeting, an official announcement, another guidance message 2110, and an advertisement image 2120 may be displayed on the second display 21 of the moving robot 1. Here, the advertisement image 2120 may be an advertisement image related to the travel destination based on the ticket recognition result.

As is apparent from the above description, at least one of the embodiments of the present disclosure has the effect of providing various kinds of services, such as guidance service, in a public place.

In addition, at least one of the embodiments of the present disclosure has the effect of easily providing information displayed on a display during the provision of a service, such as guidance service.

In addition, at least one of the embodiments of the present disclosure has the effect of providing customized advertising to a person to be guided, thereby improving the advertising effects and user satisfaction.

In addition, at least one of the embodiments of the present disclosure has the effect of continuously exposing a person to be guided to advertising for a predetermined time, thereby improving the advertising effects.

Various other effects of the present disclosure have been directly or suggestively disclosed in the detailed description of the disclosure.

Meanwhile, the method of operating the moving robot according to the present specification may be implemented as code that can be written on a processor-readable recording medium and thus read by a processor. The processor-readable recording medium may be any type of recording device in which data is stored in a processor-readable manner. The processor-readable recording medium may include, for example, a read-only memory (ROM), a random access memory (RAM), a compact disc read-only memory (CD ROM), a magnetic tape, a floppy disc, and an optical data storage device, and may be implemented in the form of a carrier wave transmitted over the Internet. In addition, the processor-readable recording medium may be distributed over a plurality of computer systems connected to a network such that processor-readable code is written thereto and executed therefrom in a decentralized manner.

It will be understood that when an element or layer is referred to as being "on" another element or layer, the element or layer can be directly on another element or layer or intervening elements or layers. In contrast, when an element is referred to as being "directly on" another element or layer, there are no intervening elements or layers present. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section could be termed a second element, component, region, layer or section without departing from the teachings of the present invention.

Spatially relative terms, such as "lower", "upper" and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "lower" relative to other elements or features would then be oriented "upper" relative the other elements or features. Thus, the exemplary term "lower" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments of the disclosure are described herein with reference to cross-section illustrations that are schematic illustrations of idealized embodiments (and intermediate structures) of the disclosure. As such, variations from the shapes of the illustrations as a result, for example, of manufacturing techniques and/or tolerances, are to be expected. Thus, embodiments of the disclosure should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

It is an object of the present disclosure to provide a moving robot capable of providing various kinds of services, such as guidance service, in a public place and a method of operating the same.

It is another object of the present disclosure to provide a moving robot capable of easily providing information displayed on a display during the provision of a service, such as guidance service, and a method of operating the same.

It is another object of the present disclosure to provide a moving robot capable of providing customized advertising to a person to be guided, thereby improving the advertising effects and user satisfaction, and a method of operating the same.

It is a further object of the present disclosure to provide a moving robot capable of continuously exposing a person to be guided to advertising for a predetermined time, thereby improving the advertising effects, and a method of operating the same.

In accordance with an aspect of the present disclosure, the above and other objects can be accomplished by the provision of a method of operating a moving robot including receiving a touch input or a voice input including a predetermined keyword, determining a guidance destination based on the predetermined keyword, creating a route to the determined guidance destination, moving along the created route, and displaying an advertisement image based on the predetermined keyword, thereby improving advertising effects and user satisfaction.

In accordance with another aspect of the present disclosure, there is provided a method of operating a moving robot including recognizing a ticket inserted into a ticket slot, determining a guidance destination based on a ticket recognition result, creating a route to the determined guidance destination, moving along the created route, and displaying an advertisement image based on the ticket recognition result, thereby improving advertising effects and user satisfaction.

This application relates to U.S. Application Serial No. __________ (Attorney Docket No. HI-1335), U.S. Application Serial No. __________ (Attorney Docket No. HI-1336), U.S. Application Serial No. __________ (Attorney Docket No. HI-1337), and U.S. Application Serial No. __________ (Attorney Docket No. PBC-0625), all filed on __________, 2017, which are hereby incorporated by reference in their entirety. Further, one of ordinary skill in the art will recognize that features disclosed in these above-noted applications may be combined in any combination with features disclosed herein.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method of operating a moving robot comprising:
receiving an input of at least one of a touch or a voice, the input including at least one predetermined keyword;
determining a guidance destination based on the at least one predetermined keyword;
creating a route to the determined guidance destination;
moving along the created route; and
displaying an advertisement image based on the at least one predetermined keyword.

2. The method according to claim 1, wherein the at least one predetermined keyword is at least one selected from among a shop name, an item name, a brand name, and a destination name.

3. The method according to any one of the preceding claims, wherein the advertisement image changes based on a current position of the moving robot.

4. The method according to any one of the preceding claims, further comprising:
acquiring an image of a user through a camera; and
determining an age and a sex of the user based on the acquired image, wherein
the advertisement image is changed depending on the determined age and sex of the user.

5. The method according to any one of the preceding claims, further comprising displaying a guidance information screen including destination information, navigation information of a map screen, information about a remaining distance based on the destination information, and information about a remaining time based on the destination information.

6. The method according to claim 5, wherein the advertisement image is displayed on the map screen.

7. The method according to any one of the preceding claims, further comprising:
transmitting the predetermined keyword to a server; and
receiving an advertisement image corresponding to the predetermined keyword from the server.

8. The method according to any one of the preceding claims, wherein the advertisement image is changed depending on a guidance region, which is selected from among a plurality of guidance regions based on a current position of the moving robot.
